# EUROPEAN PATENT APPLICATION

(11) **EP 4 414 590 A1**
(43) Date of publication of application: **14.08.2024**
(21) Application number: 22878318.9
(22) Date of filing: 20.09.2022
(51) Int. Cl.: F16K 27/00, F25B 41/26

(54) **VALVE DEVICE**

(30) Priority: 05.10.2021 JP 2021164221
(71) Applicant: Fujikoki Corporation, Tokyo 158-0082 (JP)
(72) Inventor: HAYAKAWA Junya, Tokyo 158-0082 (JP)
(74) Representative: Ter Meer Steinmeister & Partner
(86) International application number: PCT/JP2022/034934
(87) International publication number: WO 2023/058447

(57) **Abstract**

[Object] To provide a valve device capable of suppressing refrigerant leakage and a reduction in cooling efficiency and reducing noise caused by refrigerant flow.

[Solution] A valve device (5) is used in an air conditioning device (1). The valve device (5) includes a valve body (100) including refrigerant passages and valve units mounted on or in the valve body (100). The refrigerant passages include a high-temperature refrigerant passage through which high-temperature refrigerant flows, a medium-temperature refrigerant passage through which medium-temperature refrigerant with a lower temperature than the high-temperature refrigerant flows, and a low-temperature refrigerant passage through which low-temperature refrigerant with a lower temperature than the medium-temperature refrigerant flows.

## Description

### Technical Field

The present invention relates to a valve device used in a refrigeration cycle device.

### Background Art

Patent Literature 1 discloses a refrigeration cycle device according to the related art. The refrigeration cycle device in Patent Literature 1 includes a refrigerant circuit switcher including a first on-off valve, a second on-off valve, and a third on-off valve. The refrigerant circuit switcher switches between a first circuit and a second circuit. In the first circuit, refrigerant flowing out of an indoor condenser flows through a receiver drier, a heating expansion valve, and an outdoor heat exchanger, in this sequence. In the second circuit, refrigerant flowing out of the outdoor heat exchanger flows through the receiver drier, a cooling expansion valve, and an indoor evaporator, in this sequence. In the refrigeration cycle device, the receiver drier is arranged upstream of the heating expansion valve in the first circuit and upstream of the cooling expansion valve in the second circuit. The receiver drier stores an excess of liquid-phase refrigerant condensed in the indoor condenser. This enables refrigerant flowing out of the outdoor heat exchanger, acting as an evaporator, or the indoor evaporator to be superheated.

### Citation List

### Patent Literature

Patent Literature 1: Japanese Unexamined Patent Application Publication No. 2020-176824

### Summary of Invention

### Technical Problem

In the refrigeration cycle device described above, the indoor condenser, the first on-off valve, and the second on-off valve are connected via a three-way joint and pipes. The receiver drier and other components are also connected in the same or a similar manner. As a result, the refrigeration cycle device has many connecting points, increasing the possibility of refrigerant leakage. In addition, the components of the refrigeration cycle device are connected via the three-way joint and the pipes, increasing the size of the refrigeration cycle device.

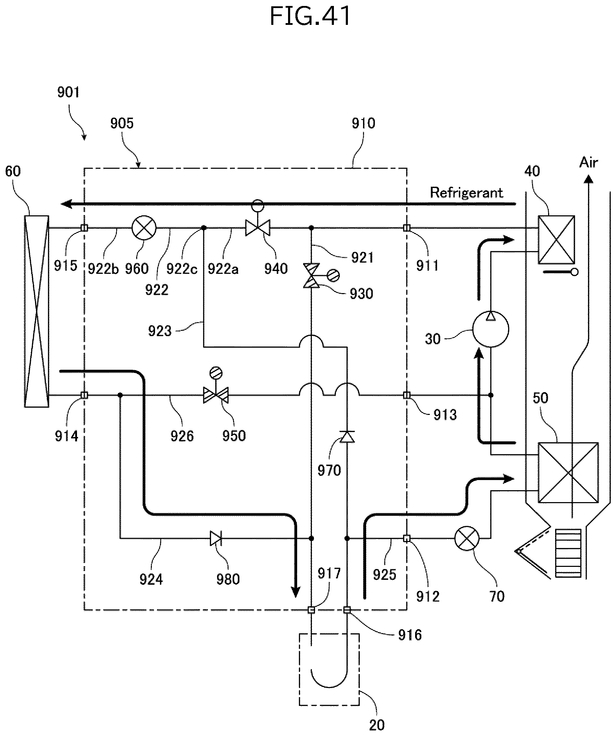

The connecting points can be reduced by incorporating, in the refrigeration cycle device, for example, a valve device that includes a valve body with refrigerant passages and valve units, mounted on or in the valve body, for changing the passage areas of the refrigerant passages. Fig. 41 illustrates an example of the valve device.

A valve device 905 illustrated in Fig. 41 is installed in an air conditioning device 901 that serves as a refrigeration cycle device. The valve device 905 includes a valve body 910. The outer surface of the valve body 910 has a first indoor-side opening 911, a second indoor-side opening 912, a third indoor-side opening 913, a first outdoor-side opening 914, a second outdoor-side opening 915, a first intermediate opening 916, and a second intermediate opening 917.

The valve body 910 includes a first refrigerant passage 921, a second refrigerant passage 922, a third refrigerant passage 923, a fourth refrigerant passage 924, a fifth refrigerant passage 925, and a sixth refrigerant passage 926. The first refrigerant passage 921 connects the first indoor-side opening 911 and the second intermediate opening 917. The second refrigerant passage 922 connects the first indoor-side opening 911 and the second outdoor-side opening 915. The third refrigerant passage 923 connects the first intermediate opening 916 and a connecting point 922c of the second refrigerant passage 922. The fourth refrigerant passage 924 connects the first outdoor-side opening 914 and the second intermediate opening 917. The fifth refrigerant passage 925 connects the first intermediate opening 916 and the second indoor-side opening 912. The sixth refrigerant passage 926 connects the first outdoor-side opening 914 and the third indoor-side opening 913. The second refrigerant passage 922 includes a first passage part 922a between the first indoor-side opening 911 and the connecting point 922c, and a second passage part 922b between the second outdoor-side opening 915 and the connecting point 922c.

The valve device 905 includes a first on-off valve unit 930, a second on-off valve unit 940, a third on-off valve unit 950, a flow control valve unit 960, a first check valve unit 970, and a second check valve unit 980. These valve units are mounted on or in the valve body 910.

The first on-off valve unit 930 can open and close the first refrigerant passage 921. The second on-off valve unit 940 can open and close the first passage part 922a of the second refrigerant passage 922. The third on-off valve unit 950 can open and close the sixth refrigerant passage 926. The flow control valve unit 960 can change, in a stepless manner (including a substantially stepless manner), the passage area of the second passage part 922b of the second refrigerant passage 922. The first check valve unit 970 allows refrigerant to flow in the third refrigerant passage 923 from the first intermediate opening 916 to the second refrigerant passage 922 and restricts refrigerant from flowing in the third refrigerant passage 923 from the second refrigerant passage 922 to the first intermediate opening 916. The second check valve unit 980 allows refrigerant to flow in the fourth refrigerant passage 924 from the first outdoor-side opening 914 to the second intermediate opening 917 and restricts refrigerant from flowing in the fourth refrigerant passage 924 from the second intermediate opening 917 to the first outdoor-side opening 914.

The first indoor-side opening 911 is connected to a discharge port of a compressor 30 via an indoor condenser 40. The second indoor-side opening 912 is connected to a flow control valve 70 that serves as a cooling expansion valve. The flow control valve 70 is connected to an inlet of the indoor evaporator 50. An outlet of the indoor evaporator 50 is connected to a suction port of the compressor 30. The third indoor-side opening 913 is connected to the suction port of the compressor 30. The first outdoor-side opening 914 is connected to an outlet of an outdoor heat exchanger 60. The second outdoor-side opening 915 is connected to an inlet of the outdoor heat exchanger 60. The first intermediate opening 916 is connected to an outlet of a receiver drier 20. The second intermediate opening 917 is connected to an inlet of the receiver drier 20.

In a cooling operation mode, the first on-off valve unit 930 closes the first refrigerant passage 921, the second on-off valve unit 940 opens the first passage part 922a, the flow control valve unit 960 maximizes the passage area (fully open state) of the second passage part 922b, and the third on-off valve unit 950 closes the sixth refrigerant passage 926. In the cooling operation mode, refrigerant flows through the compressor 30, the indoor condenser 40, the second refrigerant passage 922 (the second on-off valve unit 940 and the flow control valve unit 960), the outdoor heat exchanger 60, the fourth refrigerant passage 924 (the second check valve unit 980), the receiver drier 20, the fifth refrigerant passage 925, the flow control valve 70, and the indoor evaporator 50 in this sequence and then returns to the compressor 30. Arrows in Fig. 41 schematically illustrate the flow of refrigerant.

In the cooling operation mode, high-temperature refrigerant flowing out of the indoor condenser 40 flows through the second refrigerant passage 922 and the fourth refrigerant passage 924. Medium-temperature refrigerant flowing into the flow control valve 70 flows through the fifth refrigerant passage 925. Therefore, the temperature of the valve body 910 increases due to high-temperature refrigerant flowing through the second refrigerant passage 922 and the fourth refrigerant passage 924, which may cause medium-temperature refrigerant flowing through the fifth refrigerant passage 925 to be heated. As a result, the cooling efficiency of the air conditioning device 901 may be reduced, or noise may be caused when medium-temperature refrigerant flows through the flow control valve 70.

Accordingly, it is an object of the present invention to provide a valve device capable of suppressing refrigerant leakage and a reduction in cooling efficiency and reducing noise caused by refrigerant flow.

### Solution to Problem

To achieve the object described above, a valve device according to the present invention is a valve device used in a refrigeration cycle device. The valve device includes a valve body including refrigerant passages and valve units mounted on or in the valve body. The refrigerant passages include a high-temperature refrigerant passage through which high-temperature refrigerant flows, a medium-temperature refrigerant passage through which medium-temperature refrigerant with a lower temperature than the high-temperature refrigerant flows, and a low-temperature refrigerant passage through which low-temperature refrigerant with a lower temperature than the medium-temperature refrigerant flows.

In the present invention, preferably, an outlet of the low-temperature refrigerant passage is adjacent to an outlet of the medium-temperature refrigerant passage.

In the present invention, preferably, an outlet of the low-temperature refrigerant passage is between an outlet of the medium-temperature refrigerant passage and an outlet of the high-temperature refrigerant passage.

In the present invention, preferably, a minimum distance between the low-temperature refrigerant passage and the medium-temperature refrigerant passage is shorter than a minimum distance between the high-temperature refrigerant passage and the medium-temperature refrigerant passage.

In the present invention, preferably, a heat exchange mechanism facilitating heat exchange between refrigerant flowing through the low-temperature refrigerant passage and the valve body is provided in the low-temperature refrigerant passage.

In the present invention, preferably, the heat exchange mechanism includes grooves formed on an inner surface of the low-temperature refrigerant passage.

In the present invention, preferably, the heat exchange mechanism includes a heat exchange member having a cylindrical shape. Preferably, an outer peripheral surface of the heat exchange member is in close contact with an inner surface of the low-temperature refrigerant passage, and refrigerant flows inside the heat exchange member. Preferably, the heat exchange member has a higher thermal conductivity than the valve body.

In the present invention, preferably, the refrigeration cycle device includes a compressor and an indoor condenser arranged downstream of the compressor. Preferably, the high-temperature refrigerant passage is connected to an outlet of the indoor condenser. Preferably, the low-temperature refrigerant passage is connected to a suction port of the compressor.

In the present invention, preferably, the refrigeration cycle device or the valve device includes an expansion valve. Preferably, the medium-temperature refrigerant passage is connected to the expansion valve.

In the present invention, preferably, the valve body includes an outer surface having a first indoor-side opening, a second indoor-side opening, a third indoor-side opening, a fourth indoor-side opening, a first outdoor-side opening, a second outdoor-side opening, a first intermediate opening, and a second intermediate opening. Preferably, the refrigerant passages include a first refrigerant passage connecting the first indoor-side opening and the second intermediate opening, a second refrigerant passage connecting the first indoor-side opening and the second outdoor-side opening, a third refrigerant passage connecting the first intermediate opening and the second refrigerant passage, a fourth refrigerant passage connecting the first outdoor-side opening and the second intermediate opening, a fifth refrigerant passage connecting the first intermediate opening and the second indoor-side opening, a sixth refrigerant passage connecting the first outdoor-side opening and the third indoor-side opening, and a seventh refrigerant passage connecting the fourth indoor-side opening and the third indoor-side opening. Preferably, the second refrigerant passage includes a first passage part between the first indoor-side opening and a connecting point to which the third refrigerant passage is connected, and a second passage part between the second outdoor-side opening and the connecting point. Preferably, the valve units include a first on-off valve unit configured to open and close the first refrigerant passage, a second on-off valve unit configured to open and close the first passage part of the second refrigerant passage, a third on-off valve unit configured to open and close the sixth refrigerant passage, a flow control valve unit configured to change, in a stepless manner, a passage area of the second passage part of the second refrigerant passage, a first check valve unit that allows refrigerant to flow in the third refrigerant passage from the first intermediate opening to the second refrigerant passage and restricts refrigerant from flowing in the third refrigerant passage from the second refrigerant passage to the first intermediate opening, and a second check valve unit that allows refrigerant to flow in the fourth refrigerant passage from the first outdoor-side opening to the second intermediate opening and restricts refrigerant from flowing in the fourth refrigerant passage from the second intermediate opening to the first outdoor-side opening. Preferably, in a heating operation mode, the first refrigerant passage serves as the high-temperature refrigerant passage, the third refrigerant passage serves as the medium-temperature refrigerant passage, and the sixth refrigerant passage serves as the low-temperature refrigerant passage. Preferably, in a cooling operation mode, the second refrigerant passage and the fourth refrigerant passage each serve as the high-temperature refrigerant passage, the fifth refrigerant passage serves as the medium-temperature refrigerant passage, and the seventh refrigerant passage serves as the low-temperature refrigerant passage. Preferably, in the heating operation mode, the first on-off valve unit opens the first refrigerant passage, the second on-off valve unit closes the first passage part, the flow control valve unit opens the second passage part and controls the passage area of the second passage part into a size capable of expanding refrigerant, and the third on-off valve unit opens the sixth refrigerant passage. Preferably, in the cooling operation mode, the first on-off valve unit closes the first refrigerant passage, the second on-off valve unit opens the first passage part, the flow control valve unit opens the second passage part and controls the passage area of the second passage part into a size that inhibits expansion of refrigerant, and the third on-off valve unit closes the sixth refrigerant passage.

In the present invention, preferably, the third indoor-side opening is adjacent to the second indoor-side opening.

In the present invention, preferably, the third indoor-side opening is between the second outdoor-side opening and the second indoor-side opening.

In the present invention, preferably, the refrigeration cycle device includes a compressor, an indoor condenser arranged downstream of the compressor, an outdoor heat exchanger, a flow control valve, and an indoor evaporator arranged downstream of the flow control valve. Preferably, the valve device includes a receiver drier. Preferably, the first indoor-side opening is connected to on outlet of the indoor condenser, the second indoor-side opening is connected to the flow control valve, the third indoor-side opening is connected to a suction port of the compressor, the fourth indoor-side opening is connected to an outlet of the indoor evaporator, the first outdoor-side opening is connected to an outlet of the outdoor heat exchanger, the second outdoor-side opening is connected to an inlet of the outdoor heat exchanger, the first intermediate opening is connected to an outlet of the receiver drier, and the second intermediate opening is connected to an inlet of the receiver drier.

### Advantageous Effects of Invention

The valve device according to the present invention includes the valve body including the refrigerant passages and the valve units mounted on or in the valve body. This enables refrigerant leakage at connecting points of refrigerant passages and connecting points of the refrigerant passages and the valve units to be suppressed while reducing the number of connecting components. The refrigerant passages of the valve body include the high-temperature refrigerant passage through which high-temperature refrigerant flows, the medium-temperature refrigerant passage through which medium-temperature refrigerant with a lower temperature than high-temperature refrigerant flows, and the low-temperature refrigerant passage through which low-temperature refrigerant with a lower temperature than medium-temperature refrigerant flows. Therefore, low-temperature refrigerant flowing through the low-temperature refrigerant passage can suppress the temperature of the valve body from increasing. Compared with a configuration with a valve body that includes only high-temperature and medium-temperature refrigerant passages, the heating of medium-temperature refrigerant by high-temperature refrigerant through the valve body can be inhibited. As a result, refrigerant leakage and a reduction in cooling efficiency can be suppressed, and noise caused by refrigerant flow can be reduced.

### Brief Description of Drawings

[Fig. 1] Fig. 1 is a diagram illustrating a schematic configuration of an air conditioning device including a valve device according to an embodiment of the present invention.
[Fig. 2] Fig. 2 is a diagram illustrating a flow of refrigerant of the air conditioning device in Fig. 1 in a heating operation mode.
[Fig. 3] Fig. 3 is a diagram illustrating a flow of refrigerant of the air conditioning device in Fig. 1 in a cooling operation mode.
[Fig. 4] Fig. 4 is a diagram illustrating a flow of refrigerant of the air conditioning device in Fig. 1 in a dehumidification heating operation mode.
[Fig. 5] Fig. 5 is a front view of the valve device of the air conditioning device in Fig. 1.
[Fig. 6] Fig. 6 is a perspective view of a valve module of the valve device in Fig. 5.
[Fig. 7] Fig. 7 is another perspective view of the valve module in Fig. 6.
[Fig. 8] Fig. 8 is a front view of the valve module in Fig. 6.
[Fig. 9] Fig. 9 is a right-side view of the valve module in Fig. 6.
[Fig. 10] Fig. 10 is a left-side view of the valve module in Fig. 6.
[Fig. 11] Fig. 11 is a plan view of the valve module in Fig. 6.
[Fig. 12] Fig. 12 is a bottom view of the valve module in Fig. 6.
[Fig. 13] Fig. 13 is a back view of the valve module in Fig. 6.
[Fig. 14] Fig. 14 is a sectional view taken along line A-A of Fig. 9.
[Fig. 15] Fig. 15 is a sectional view taken along line B-B of Fig. 9.
[Fig. 16] Fig. 16 is a sectional view taken along line C-C of Fig. 9.
[Fig. 17] Fig. 17 is a sectional view taken along line D-D of Fig. 9.
[Fig. 18] Fig. 18 is a sectional view taken along line E-E of Fig. 9.
[Fig. 19] Fig. 19 is a sectional view taken along line F-F of Fig. 8.
[Fig. 20] Fig. 20 is a sectional view taken along line G-G of Fig. 8.
[Fig. 21] Fig. 21 is a sectional view taken along line H-H of Fig. 8.
[Fig. 22] Fig. 22 is a sectional view taken along line J-J of Fig. 8.
[Fig. 23] Fig. 23 is a sectional view taken along line K-K of Fig. 13.
[Fig. 24] Fig. 24 is a sectional view taken along line M-M of Fig. 8.
[Fig. 25] Fig. 25 is a plan view of a valve body of the valve module in Fig. 6.
[Fig. 26] Fig. 26 is a right-side view of the valve body of the valve module in Fig. 6.
[Fig. 27] Fig. 27 is a sectional view of a first on-off valve unit of the valve module in Fig. 6.
[Fig. 28] Fig. 28 is a sectional view of a second on-off valve unit of the valve module in Fig. 6.
[Fig. 29] Fig. 29 is a sectional view of a flow control valve unit of the valve module in Fig. 6.
[Fig. 30] Fig. 30 is a perspective view of a receiver drier of the valve device in Fig. 5.
[Fig. 31] Fig. 31 is a front view of the receiver drier in Fig. 30.
[Fig. 32] Fig. 32 is a plan view of the receiver drier in Fig. 30.
[Fig. 33] Fig. 33 is a diagram illustrating a method for manufacturing the valve device in Fig. 5 (a state before the receiver drier is mounted on the valve body).
[Fig. 34] Fig. 34 is a diagram illustrating the method for manufacturing the valve device in Fig. 5 (a state after the receiver drier is mounted on the valve body).
[Fig. 35] Fig. 35 is a diagram illustrating high-temperature refrigerant flow, medium-temperature refrigerant flow, and low-temperature refrigerant flow, in a heating operation mode (#1).
[Fig. 36] Fig. 36 is a diagram illustrating high-temperature refrigerant flow, medium-temperature refrigerant flow, and low-temperature refrigerant flow, in the heating operation mode (#2).
[Fig. 37] Fig. 37 is a diagram illustrating high-temperature refrigerant flow, medium-temperature refrigerant flow, and low-temperature refrigerant flow, in a cooling operation mode (#1).
[Fig. 38] Fig. 38 is a diagram illustrating high-temperature refrigerant flow, medium-temperature refrigerant flow, and low-temperature refrigerant flow, in the cooling operation mode (#2).
[Fig. 39] Fig. 39 is a diagram illustrating a configuration of a first modification of the valve device in Fig. 5.
[Fig. 40] Fig. 40 is a diagram illustrating a configuration of a second modification of the valve device in Fig. 5.
[Fig. 41] Fig. 41 is a diagram illustrating a schematic configuration of an air conditioning device according to the related art.

### Description of Embodiments

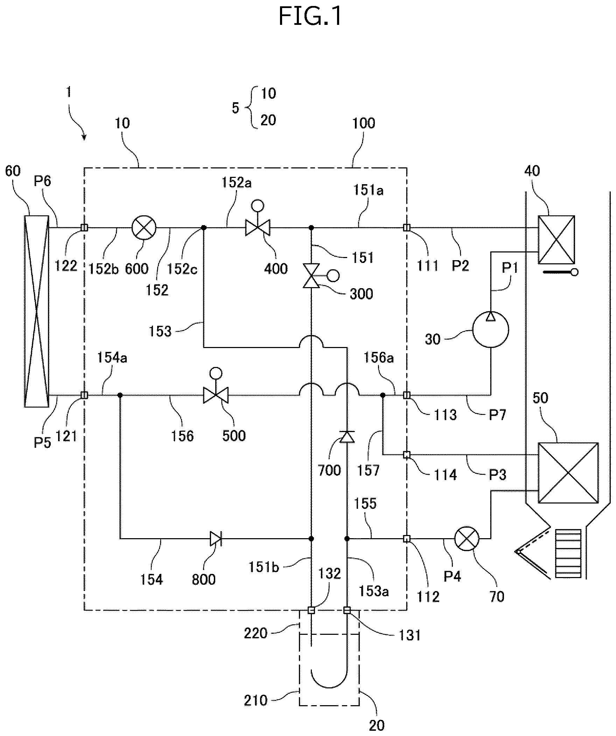

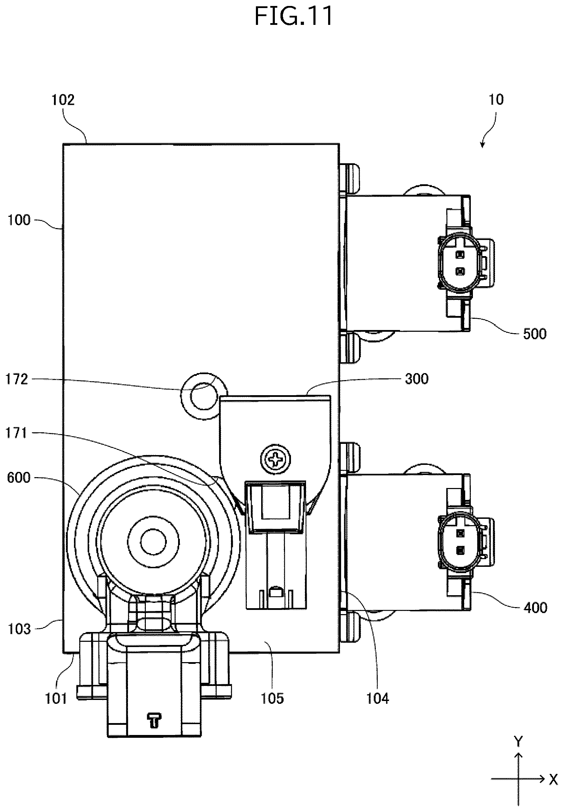

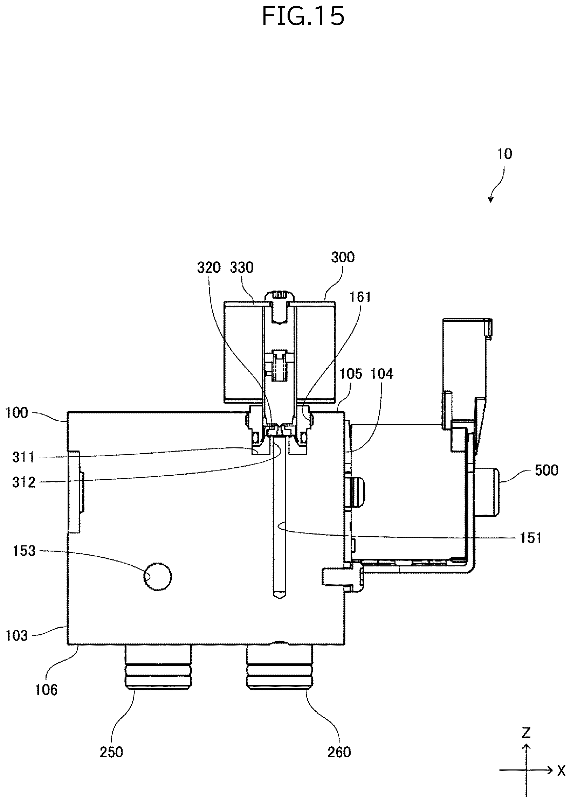

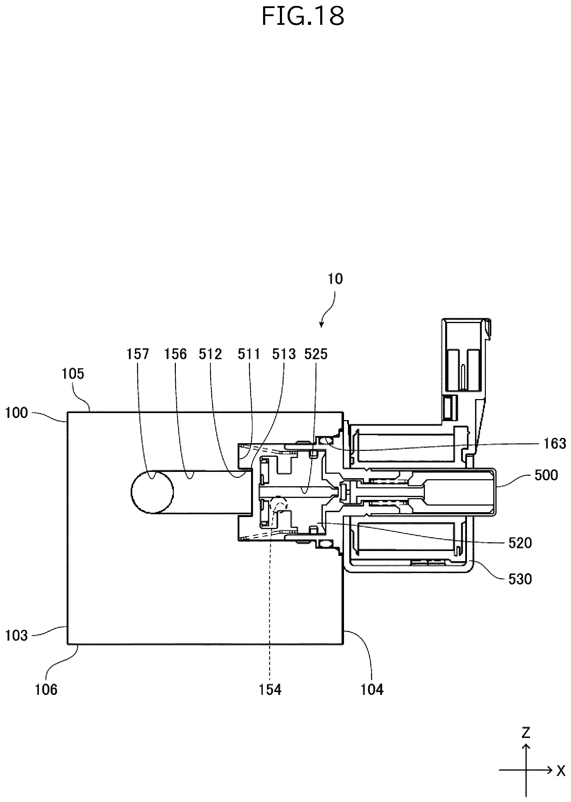

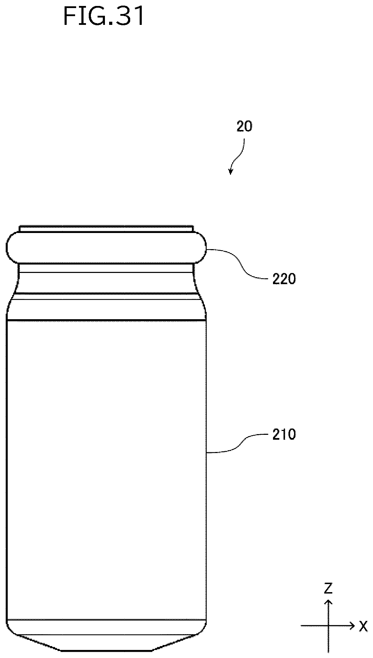

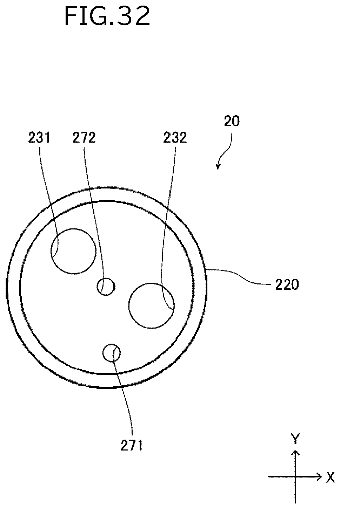

A valve device according to an embodiment of the present invention is described with reference to Fig. 1 to Fig. 40.

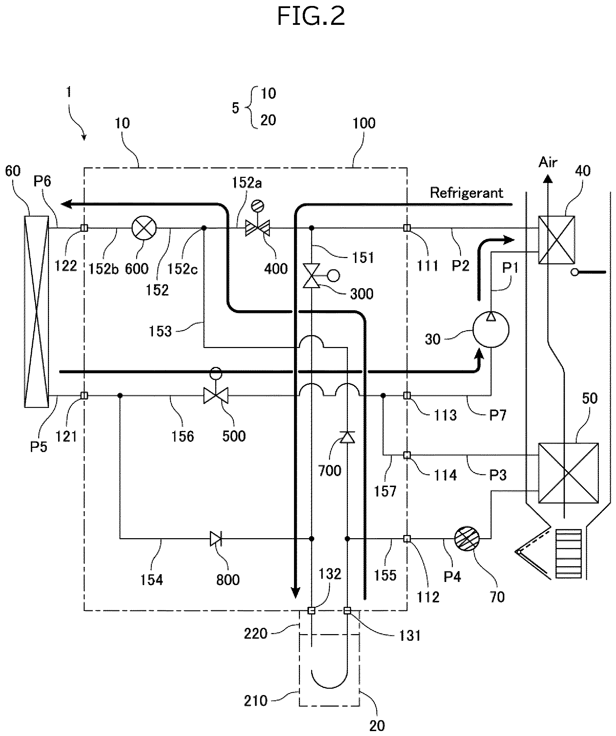

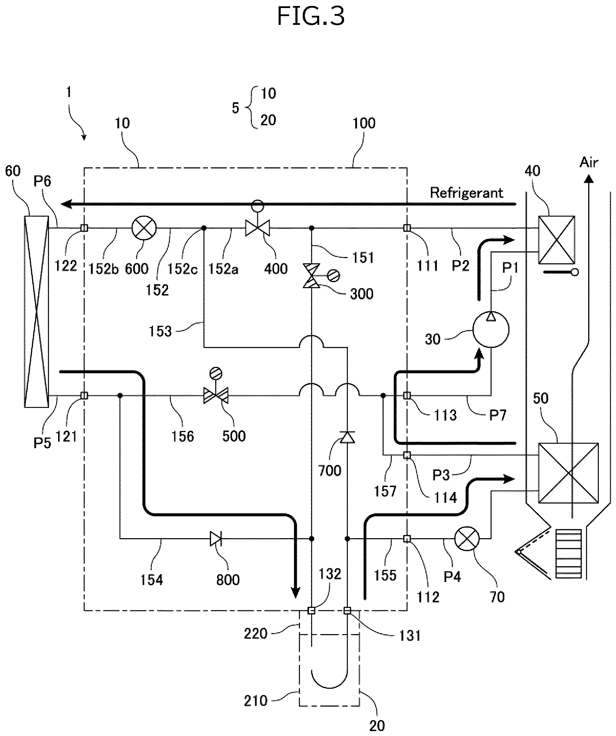

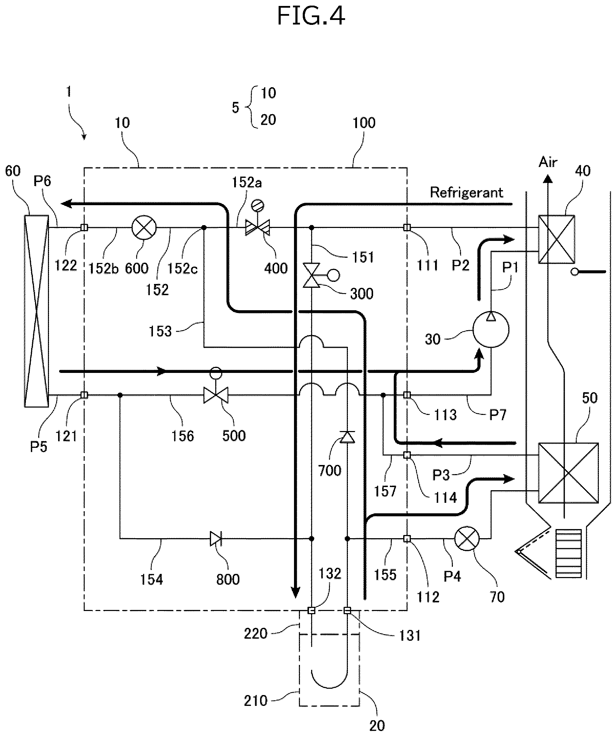

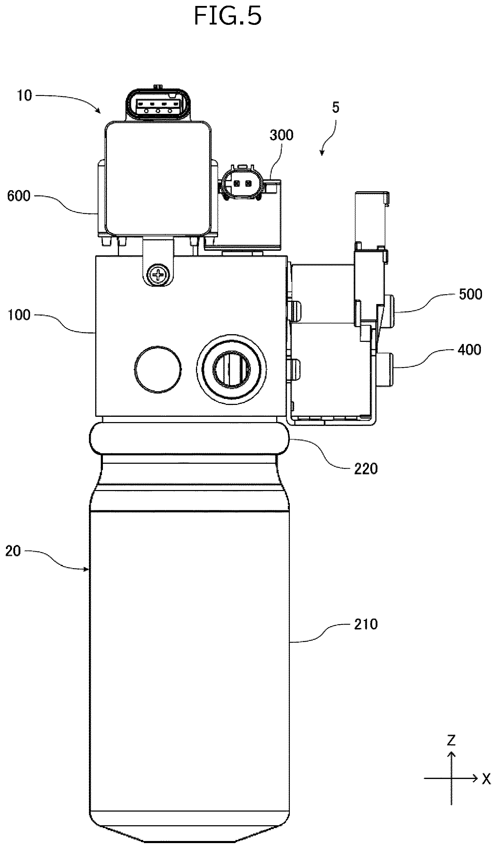

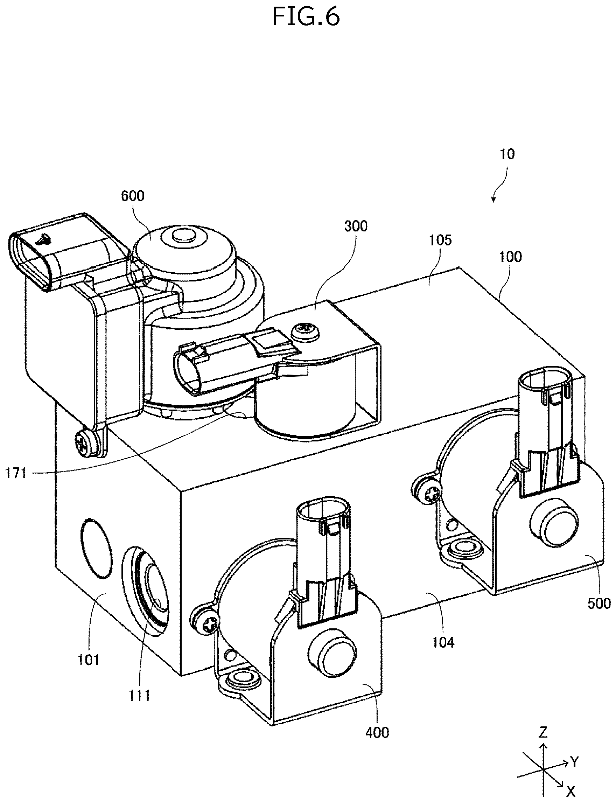

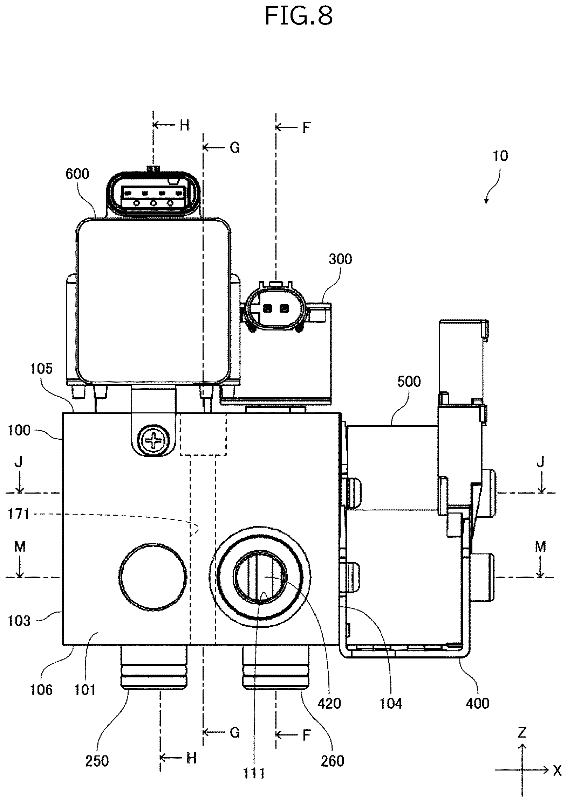

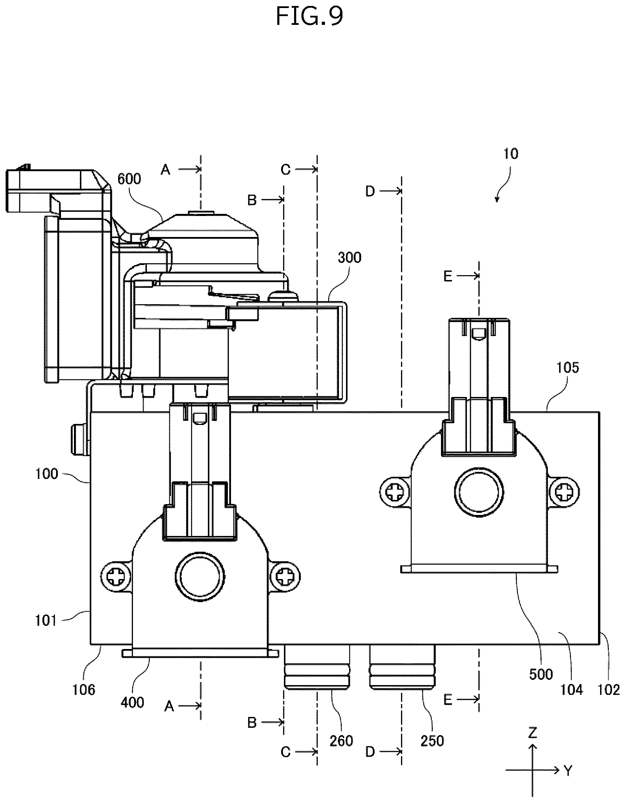

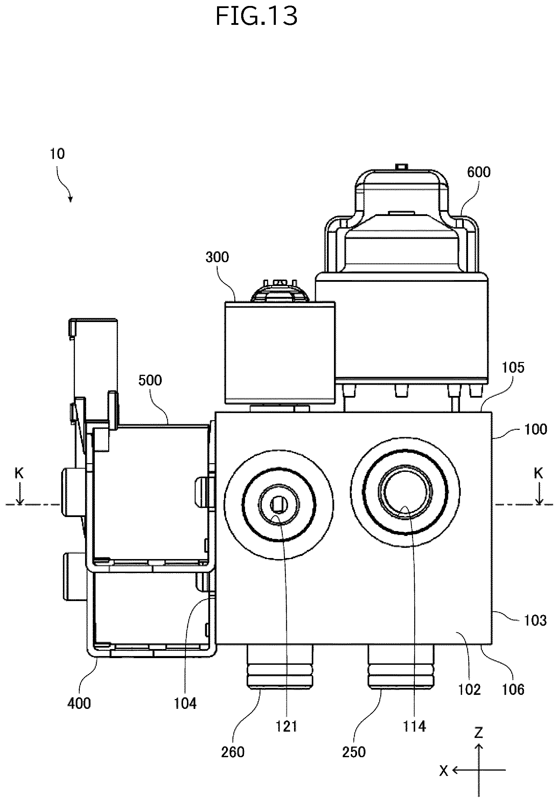

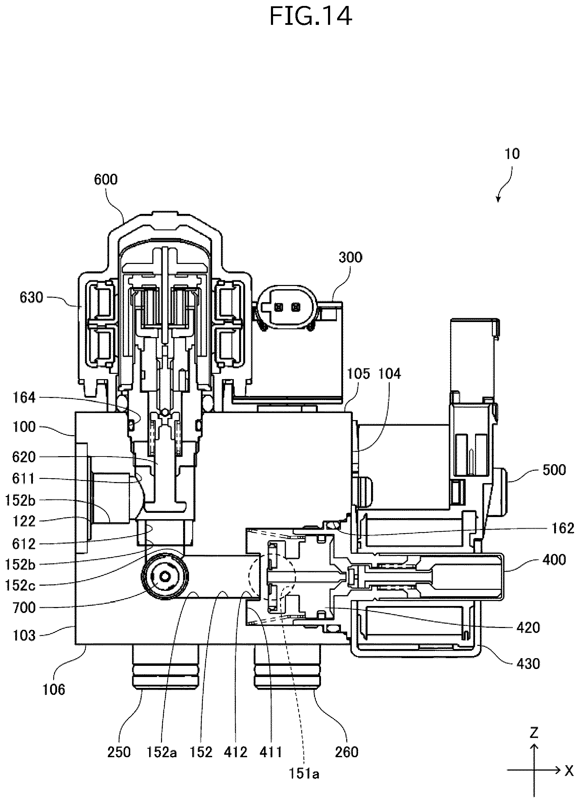

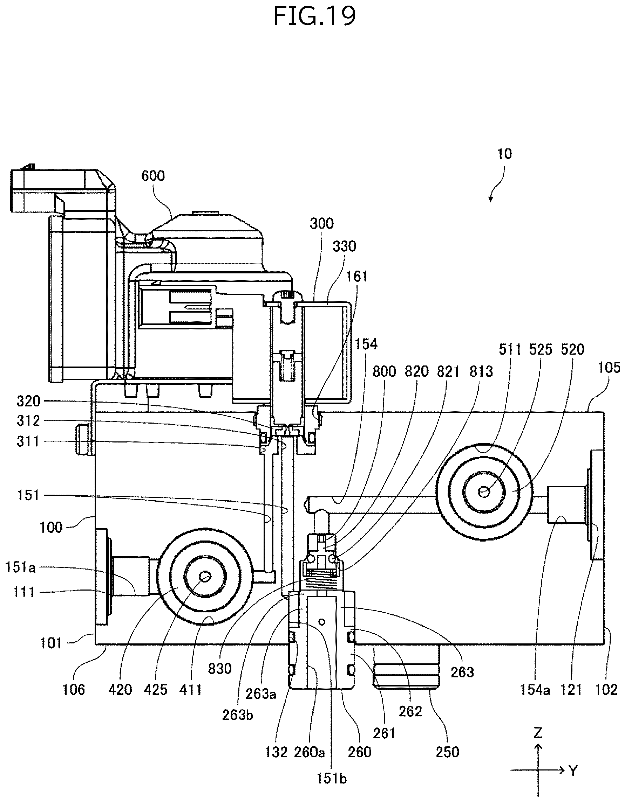

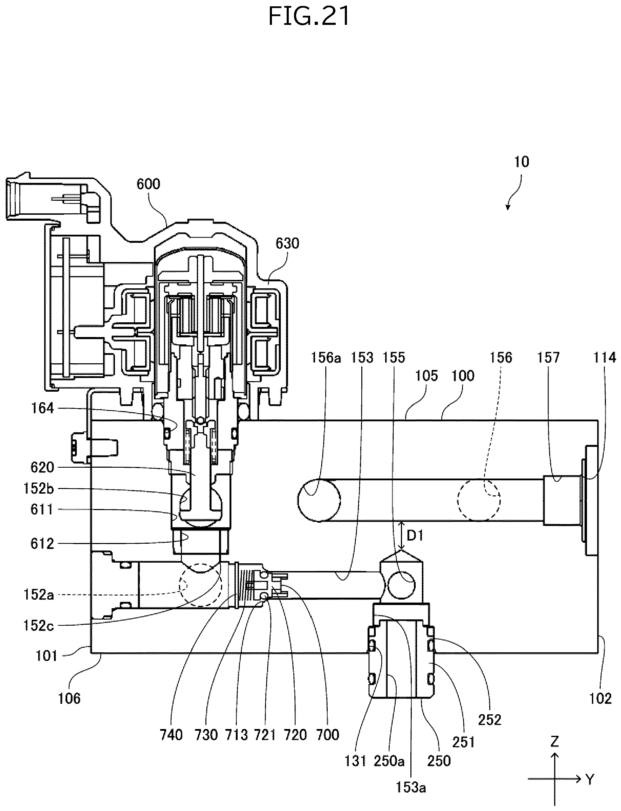

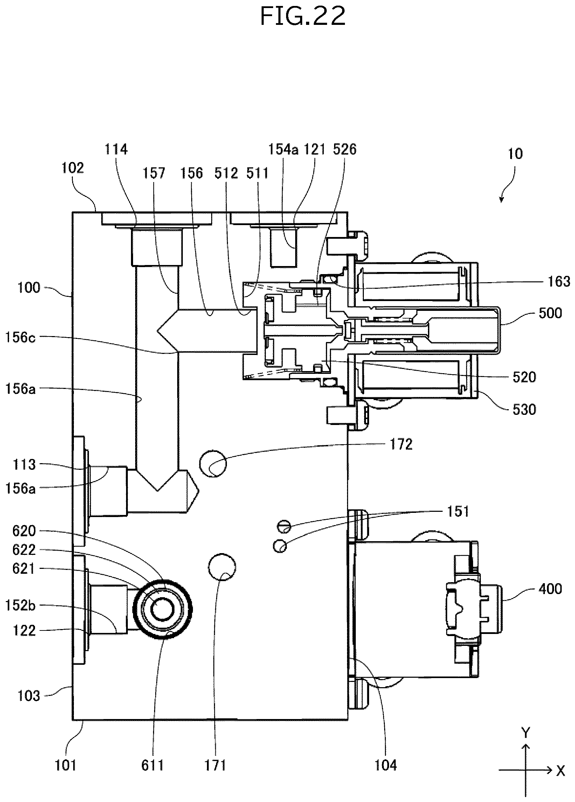

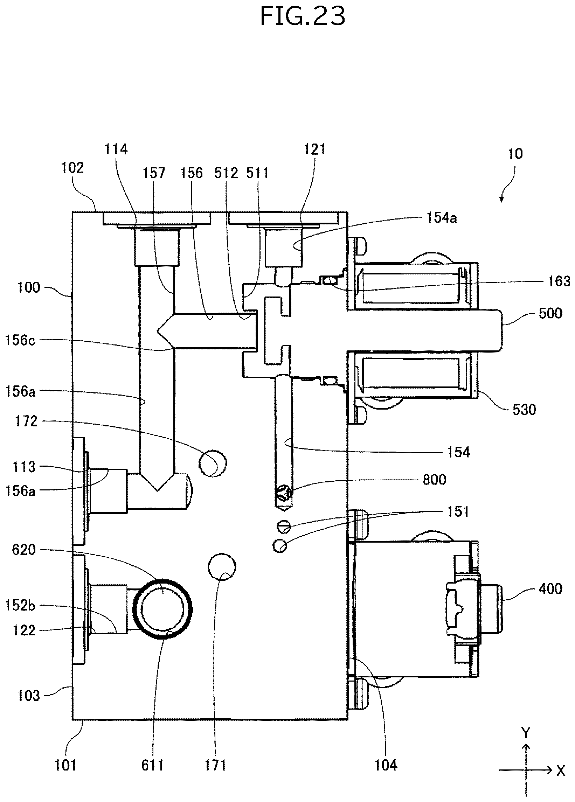

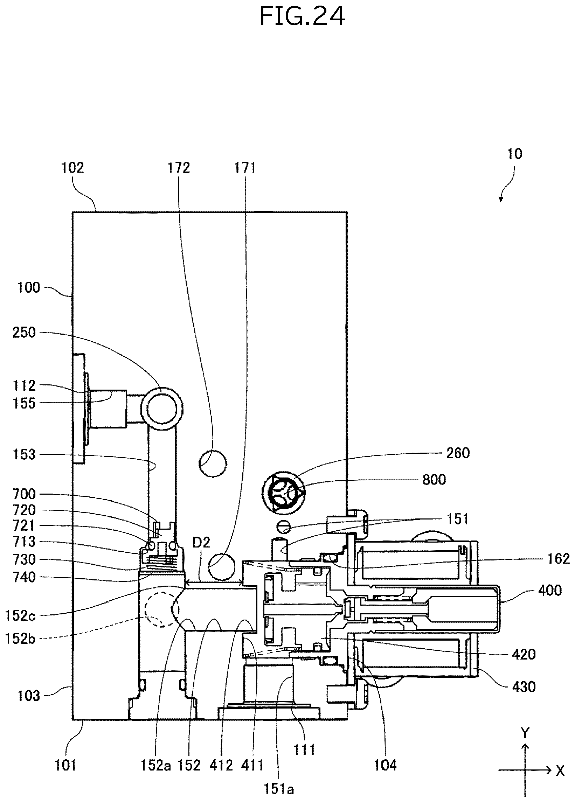

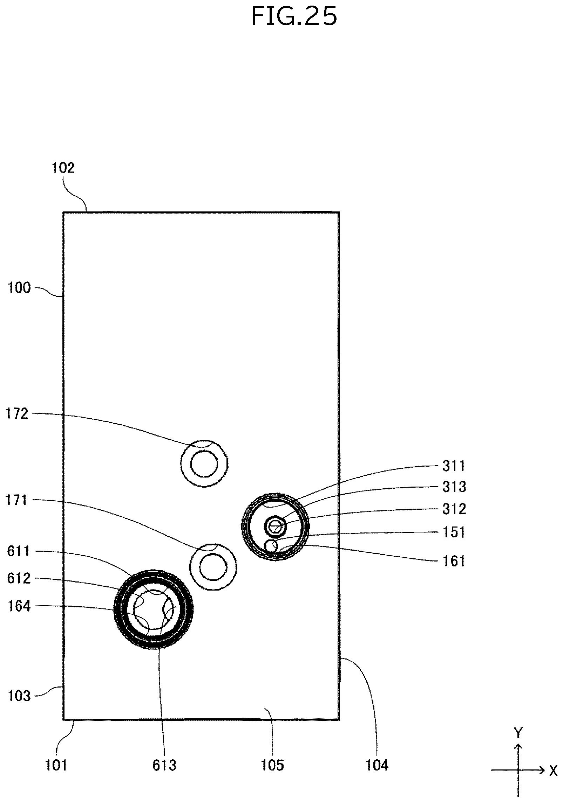

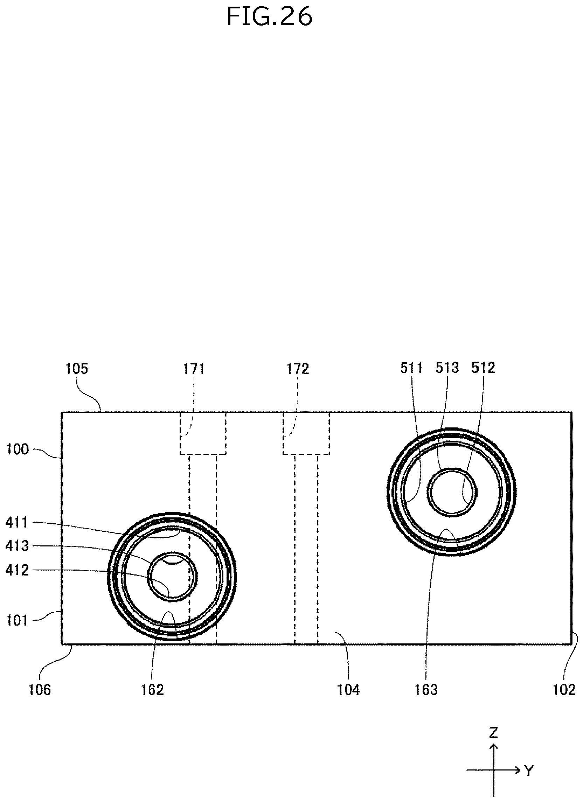

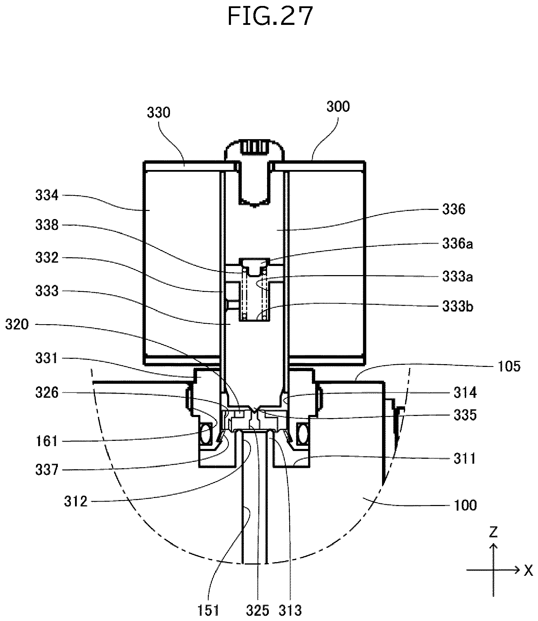

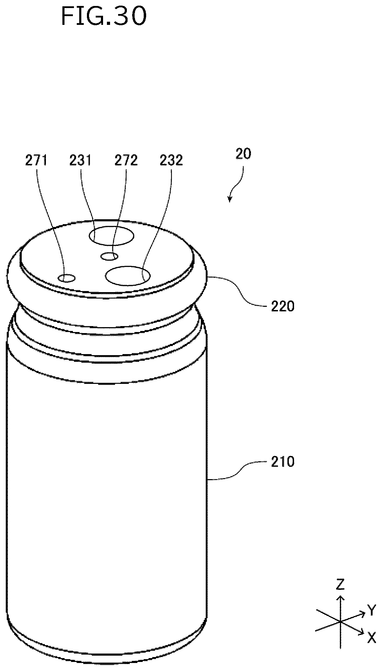

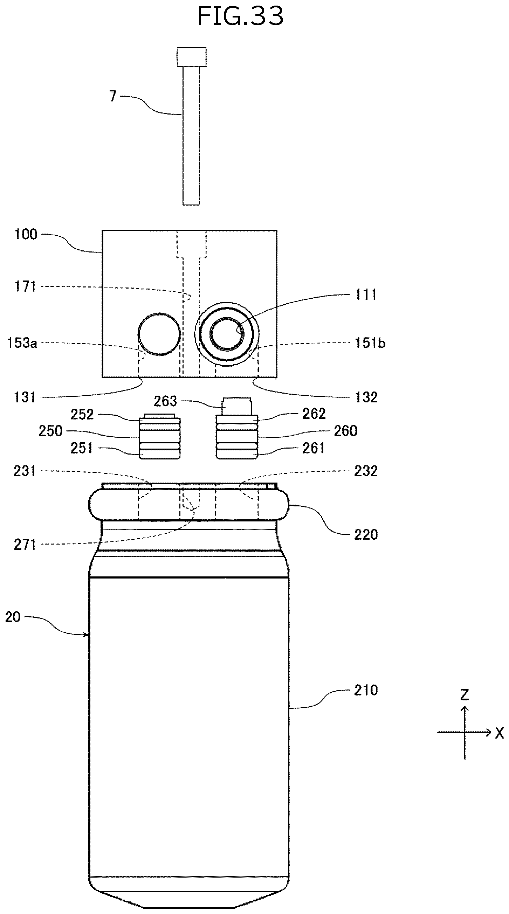

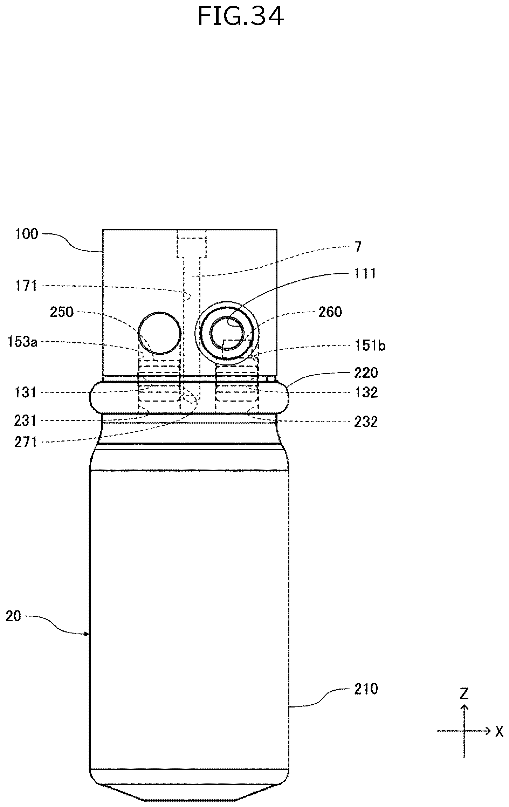

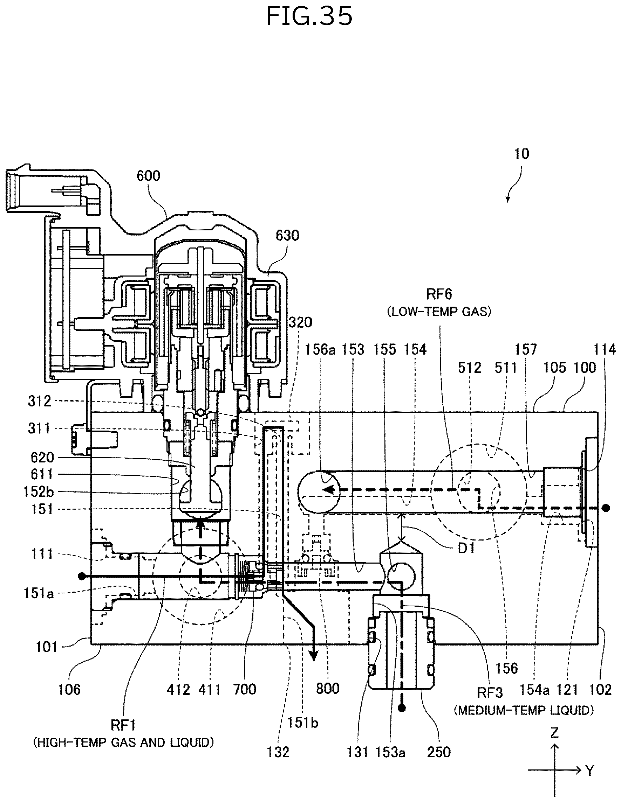

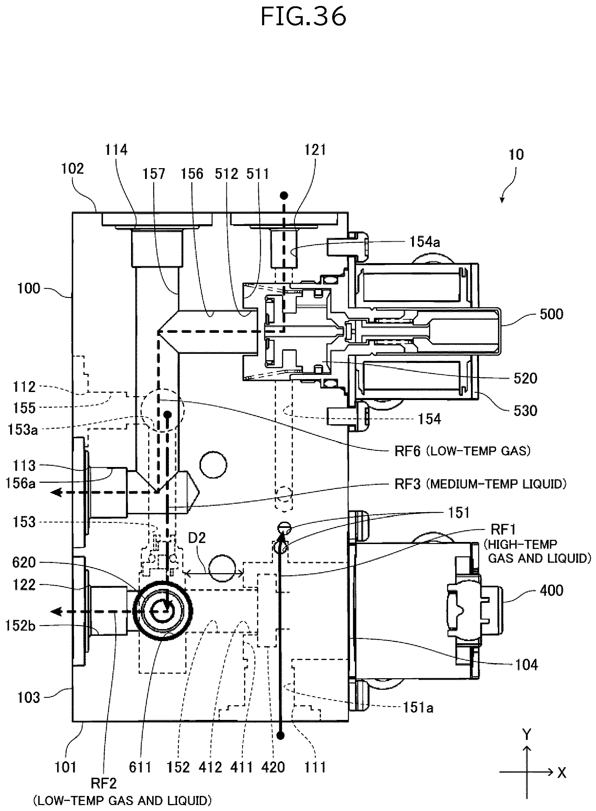

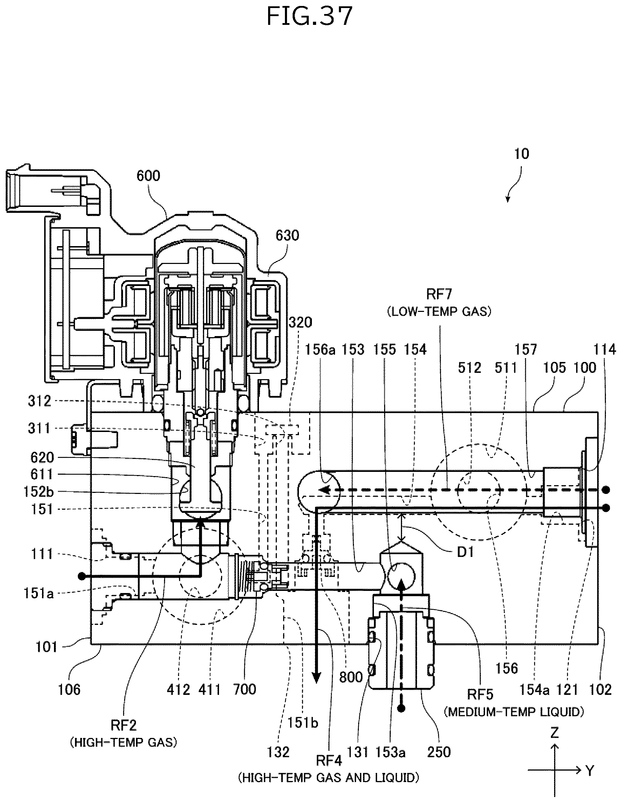

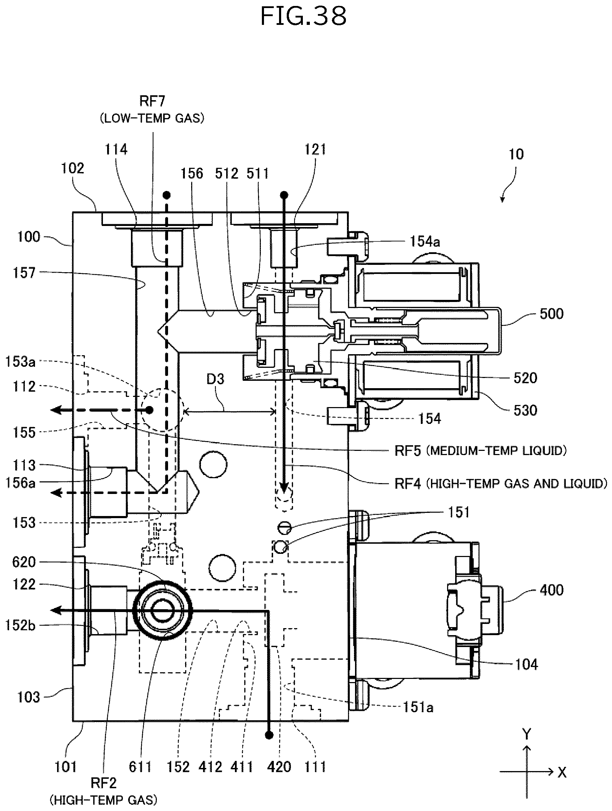

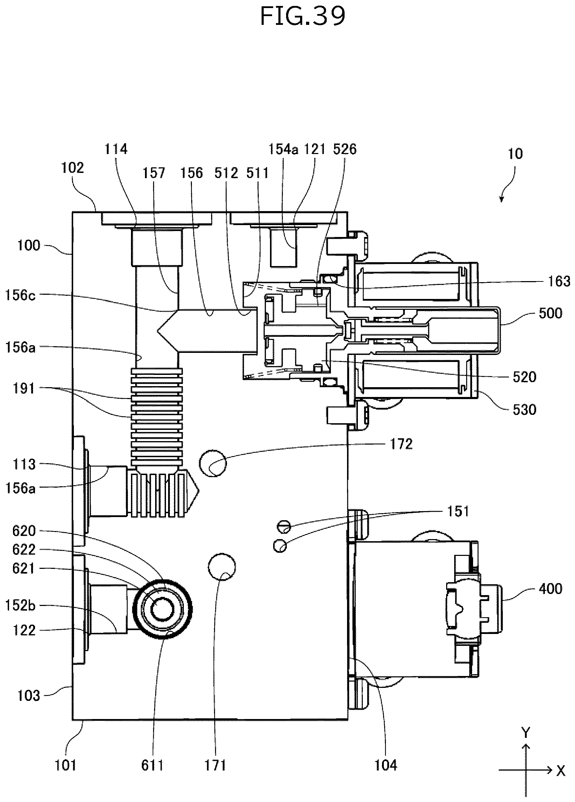

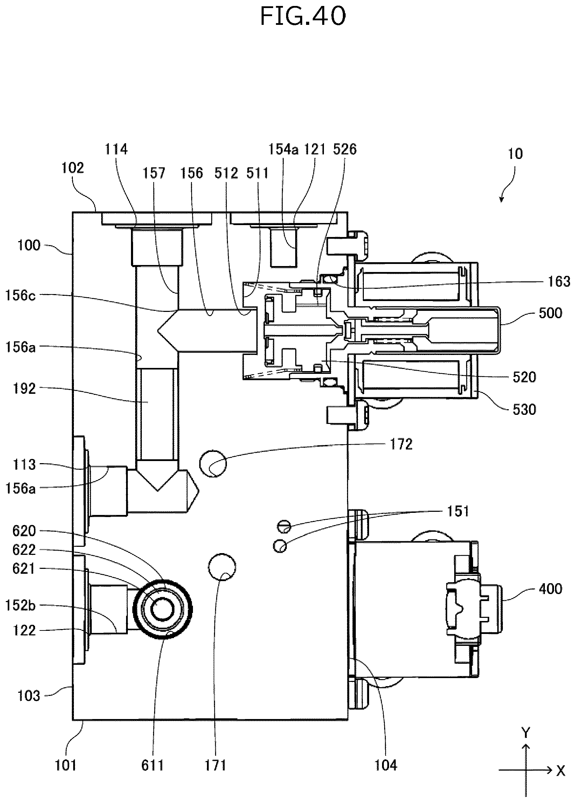

Fig. 1 is a diagram illustrating a schematic configuration of an air conditioning device including the valve device according to the embodiment of the present invention. Fig. 2 is a diagram illustrating a flow of refrigerant of the air conditioning device in Fig. 1 in a heating operation mode. Fig. 3 is a diagram illustrating a flow of refrigerant of the air conditioning device in Fig. 1 in a cooling operation mode. Fig. 4 is a diagram illustrating a flow of refrigerant of the air conditioning device in Fig. 1 in a dehumidification heating operation mode. Fig. 5 is a front view of the valve device of the air conditioning device in Fig. 1. Fig. 6 to Fig. 13 are a perspective view, another perspective view, a front view, a right-side view, a left-side view, a plan view, a bottom view, and a back view of the valve module of the valve device in Fig. 5. Fig. 14 to Fig. 18 are a sectional view taken along line A-A, a sectional view taken along line B-B, a sectional view taken along line C-C, a sectional view taken along line D-D, and a sectional view taken along line E-E of Fig. 9. Fig. 19 to Fig. 22 are a sectional view taken along line F-F, a sectional view taken along line G-G, a sectional view taken along line H-H, and a sectional view taken along line J-J of Fig. 8. Fig. 23 is a sectional view taken along line K-K of Fig. 13. Fig. 24 is a sectional view taken along line M-M of Fig. 8. Fig. 25 and Fig. 26 are a plan view and a right-side view of a valve body of the valve module in Fig. 6. Fig. 27 to Fig. 29 are a sectional view of a first on-off valve unit, a sectional view of a second on-off valve unit, and a sectional view of a flow control valve unit of the valve module in Fig. 6. Fig. 30 to Fig. 32 are a perspective view, a front view, and a plan view of a receiver drier of the valve device in Fig. 5. Fig. 33 and Fig. 34 are diagrams illustrating a method for manufacturing the valve device in Fig. 5. Fig. 33 illustrates a state before the receiver drier is mounted on the valve body. Fig. 34 illustrates a state after the receiver drier is mounted on the valve body. Fig. 35 and Fig. 36 are diagrams illustrating high-temperature refrigerant flow, medium-temperature refrigerant flow, and low-temperature refrigerant flow, in a heating operation mode. Fig. 37 and Fig. 38 are diagrams illustrating high-temperature refrigerant flow, medium-temperature refrigerant flow, and low-temperature refrigerant flow, in a cooling operation mode. In Fig. 35 and Fig. 37, refrigerant flow is schematically overlaid on the same sectional view illustrated in Fig. 21. In Fig. 36 and Fig. 38, refrigerant flow is schematically overlaid on the same sectional view illustrated in Fig. 22. In Fig. 35 to Fig. 38, solid-line arrows schematically represent high-temperature refrigerant flow, chain-line arrows schematically represent medium-temperature refrigerant flow, and dashed-line arrows schematically represent low-temperature refrigerant flow. Fig. 39 is a diagram illustrating a configuration of a first modification of the valve device in Fig. 5. Fig. 40 is a diagram illustrating a configuration of a second modification of the valve device in Fig. 5. In each figure, an X direction indicated by arrow X represents a left-and-right direction, a Y direction indicated by arrow Y represents a front-and-back direction, and a Z direction indicated by arrow Z represents an up-and-down direction. The direction denoted by "X" on arrow X is the right direction, the direction denoted by "Y" on arrow Y is the backward direction, and the direction denoted by "Z" on arrow Z is the upward direction.

An air conditioning device 1 is, for example, a vehicle air conditioning device installed in a vehicle for heating and cooling air blown into the cabin of the vehicle. The air conditioning device 1 serves as a refrigeration cycle device.

As illustrated in Fig. 1, the air conditioning device 1 includes a valve device 5, a compressor 30, an indoor condenser 40, an indoor evaporator 50, an outdoor heat exchanger 60, and a flow control valve 70.

The valve device 5 includes a valve module 10 and a receiver drier 20.

As illustrated in Fig. 5 to Fig. 29, the valve module 10 includes a valve body 100, a first on-off valve unit 300, a second on-off valve unit 400, a third on-off valve unit 500, a flow control valve unit 600, a first check valve unit 700, and a second check valve unit 800.

The valve body 100 is, for example, formed in a rectangular parallelepiped shape by extruding an aluminum alloy. The valve body 100 includes a front surface 101, a back surface 102, a left surface 103, a right surface 104, an upper surface 105, and a lower surface 106. Each surface constitutes an outer surface of the valve body 100 and is flat.

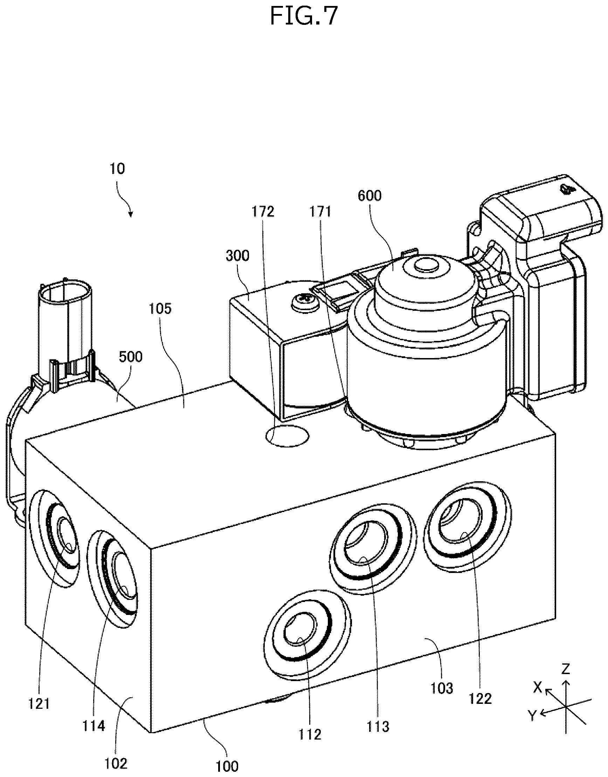

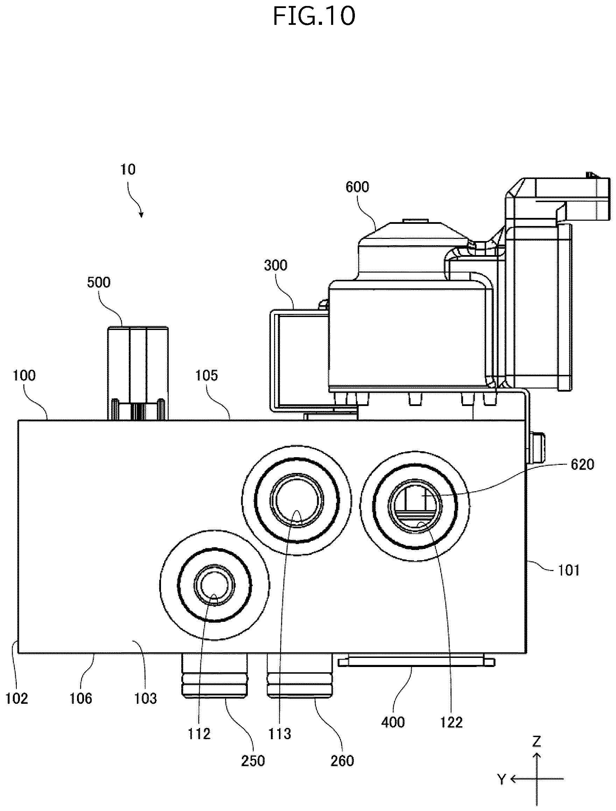

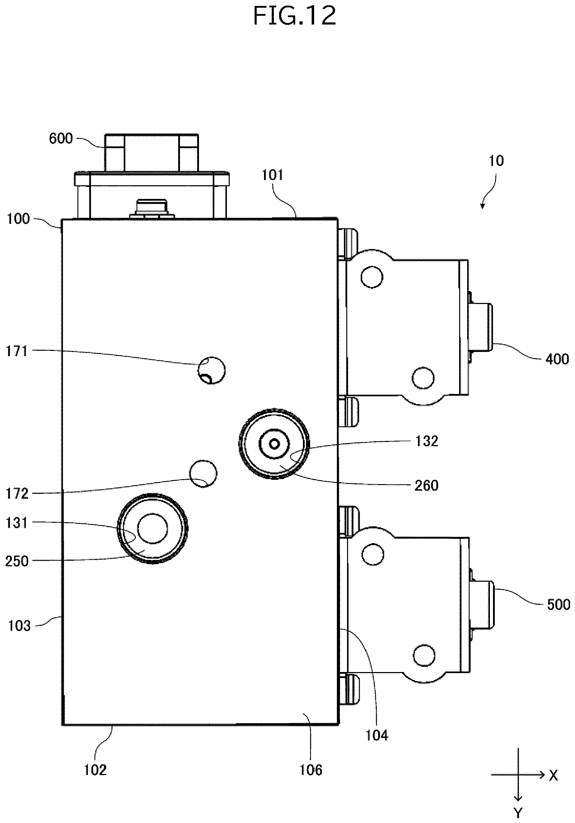

A first indoor-side opening 111 is formed on the front surface 101 (Fig. 6 and Fig. 8). A first outdoor-side opening 121 and a fourth indoor-side opening 114 are formed on the back surface 102 (Fig. 7 and Fig. 13). A second indoor-side opening 112, a third indoor-side opening 113, and a second outdoor-side opening 122 are formed on the left surface 103 (Fig. 7 and Fig. 10). The third indoor-side opening 113 is adjacent to the second indoor-side opening 112 in the left surface 103. The third indoor-side opening 113 is between the second outdoor-side opening 122 and the second indoor-side opening 112 in the left surface 103. The third indoor-side opening 113 may be formed on the upper surface 105. A first intermediate opening 131 and a second intermediate opening 132 are formed on the lower surface 106 (Fig. 12).

The valve body 100 includes refrigerant passages formed by cutting. Specifically, the valve body 100 includes a first refrigerant passage 151, a second refrigerant passage 152, a third refrigerant passage 153, a fourth refrigerant passage 154, a fifth refrigerant passage 155, a sixth refrigerant passage 156, and a seventh refrigerant passage 157.

The first refrigerant passage 151 connects the first indoor-side opening 111 and the second intermediate opening 132. The first refrigerant passage 151 extends from the first indoor-side opening 111 toward the back surface 102, then toward the upper surface 105, and then to the second intermediate opening 132 on the lower surface 106, defining its pathway. The first on-off valve unit 300 is disposed in the first refrigerant passage 151.

The second refrigerant passage 152 connects the first indoor-side opening 111 and the second outdoor-side opening 122. The second refrigerant passage 152 extends from the first indoor-side opening 111 toward the back surface 102, then toward the left surface 103, then toward the upper surface 105, and then to the second outdoor-side opening 122 on the left surface 103, defining its pathway. The second refrigerant passage 152 includes a connecting point 152c to which the third refrigerant passage 153 is connected. The second refrigerant passage 152 includes a first passage part 152a between the first indoor-side opening 111 and the connecting point 152c, and a second passage part 152b between the second outdoor-side opening 122 and the connecting point 152c. The second on-off valve unit 400 is disposed in the first passage part 152a. The flow control valve unit 600 is disposed in the second passage part 152b.

The third refrigerant passage 153 connects the first intermediate opening 131 and the second refrigerant passage 152. The third refrigerant passage 153 extends from the first intermediate opening 131 toward the upper surface 105, then toward the front surface 101, and then to the second refrigerant passage 152, defining its pathway. The first check valve unit 700 is disposed in the third refrigerant passage 153.

The fourth refrigerant passage 154 connects the first outdoor-side opening 121 and the second intermediate opening 132. The fourth refrigerant passage 154 extends from the first outdoor-side opening 121 toward the front surface 101, and then to the second intermediate opening 132 on the lower surface 106, defining its pathway. The second check valve unit 800 is disposed in the fourth refrigerant passage 154.

The fifth refrigerant passage 155 connects the first intermediate opening 131 and the second indoor-side opening 112. The fifth refrigerant passage 155 extends from the first intermediate opening 131 toward the upper surface 105, and then to the second indoor-side opening 112 on the left surface 103, defining its pathway. No valve unit capable of changing the passage area of the fifth refrigerant passage 155 is provided.

The sixth refrigerant passage 156 connects the first outdoor-side opening 121 and the third indoor-side opening 113. The sixth refrigerant passage 156 extends from the first outdoor-side opening 121 toward the front surface 101, then toward the left surface 103, then toward the front surface 101, and then to the third indoor-side opening 113 on the left surface 103, defining its pathway. The third on-off valve unit 500 is disposed in the sixth refrigerant passage 156.

The seventh refrigerant passage 157 connects the fourth indoor-side opening 114 and the third indoor-side opening 113. The seventh refrigerant passage 157 extends from the fourth indoor-side opening 114 toward the front surface 101, and then to the third indoor-side opening 113 on the left surface 103, defining its pathway. No valve unit capable of changing the passage area of the seventh refrigerant passage 157 is provided.

The first refrigerant passage 151 and the second refrigerant passage 152 share a part (refrigerant passage 151a) connected to the first indoor-side opening 111. The first refrigerant passage 151 and the fourth refrigerant passage 154 share a part (refrigerant passage 151b) connected to the second intermediate opening 132. The third refrigerant passage 153 and the fifth refrigerant passage 155 share a part (refrigerant passage 153a) connected to the first intermediate opening 131. The fourth refrigerant passage 154 and the sixth refrigerant passage 156 share a part (refrigerant passage 154a) connected to the first outdoor-side opening 121. The sixth refrigerant passage 156 and the seventh refrigerant passage 157 share a part (refrigerant passage 156a) connected to the third indoor-side opening 113.

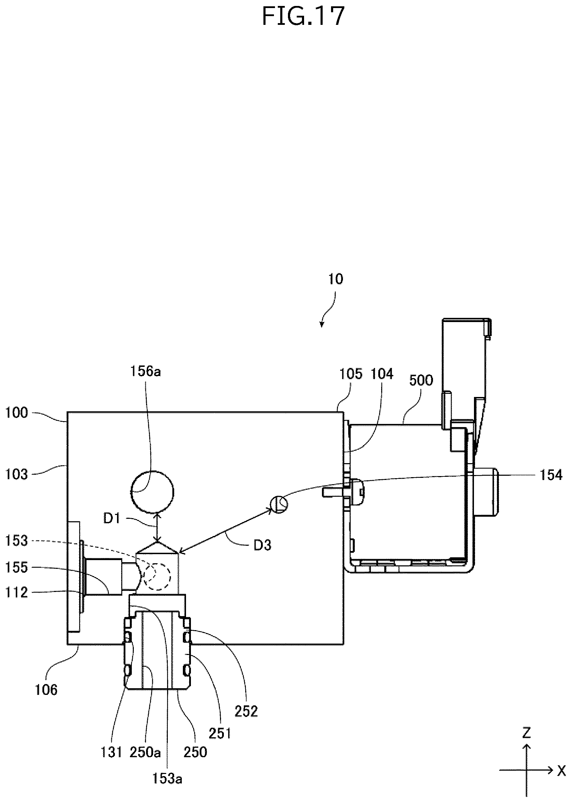

Minimum distance D1 (Fig. 17) between the third refrigerant passage 153 (the refrigerant passage 153a) and the sixth refrigerant passage 156 (the refrigerant passage 156a) is shorter than minimum distance D2 (Fig. 24) between the third refrigerant passage 153 and the first refrigerant passage 151. Minimum distance D1 is also a minimum distance between the fifth refrigerant passage 155 and the seventh refrigerant passage 157. Minimum distance D1 (Fig. 17) is shorter than minimum distance D3 between the fifth refrigerant passage 155 (the refrigerant passage 153a) and the fourth refrigerant passage 154.

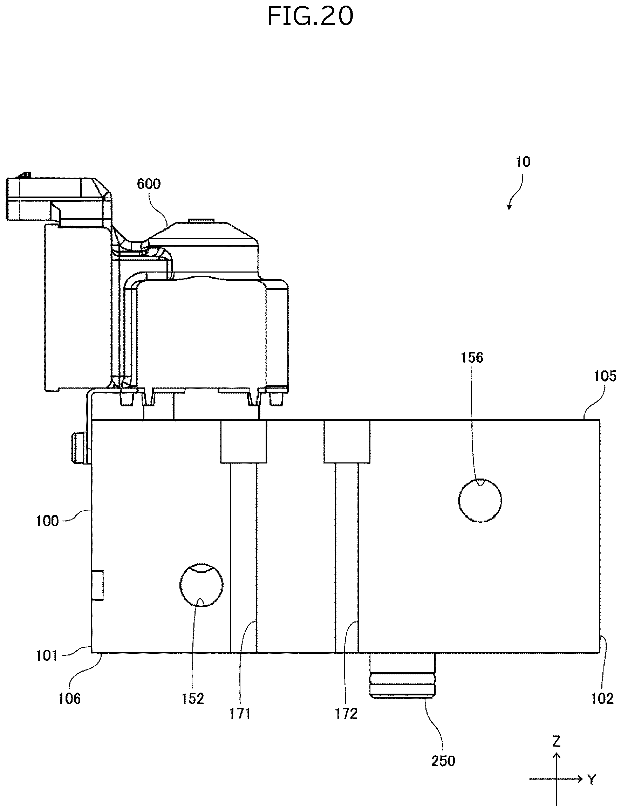

The valve body 100 also has a first through hole 171 and a second through hole 172 (Fig. 8 and Fig. 20). The first through hole 171 and the second through hole 172 extend linearly from the upper surface 105 to the lower surface 106.

The first on-off valve unit 300 is disposed in the upper surface 105, near the right surface 104. The first on-off valve unit 300 can open and close the first refrigerant passage 151. That is, the first on-off valve unit 300 can change the passage area of the first refrigerant passage 151 to zero or to an area greater than zero.

The first on-off valve unit 300 constitutes a pilot-operated on-off valve together with the valve body 100. The first on-off valve unit 300 is a normally closed valve. A first mounting hole 161 is formed on the upper surface 105 of the valve body 100. The first on-off valve unit 300 is disposed in the first mounting hole 161. The valve body 100 has a first valve chamber 311, a first valve port 312 that is open to the first valve chamber 311, and a first valve seat 313 that encloses the first valve port 312, and these are in the first mounting hole 161. The first valve chamber 311 and the first valve port 312 are parts of the first refrigerant passage 151.

As illustrated in Fig. 27, the first on-off valve unit 300 includes a main valve member 320 and a valve-member driving section 330.

The main valve member 320 has a disc shape. The main valve member 320 includes a pilot passage 325 and a pressure equalizing passage 326. The first valve port 312 closes when the main valve member 320 comes into contact with the first valve seat 313 and opens when the main valve member 320 moves away from the first valve seat 313.

The valve-member driving section 330 includes a holder 331, a case 332, a plunger 333, an electromagnetic coil 334, a pilot valve member 335, and a fixed core 336.

The holder 331 has a circular cylindrical shape. The holder 331 is mounted on the inner circumferential surface of the first mounting hole 161 of the valve body 100 by a screw structure. The main valve member 320 is disposed in the holder 331 and can move in the up-and-down direction. The main valve member 320 separates a back-pressure chamber 314 in the holder 331 from the first valve chamber 311. The pilot passage 325 connects the back-pressure chamber 314 and the first valve port 312. The pressure equalizing passage 326 connects the first valve chamber 311 and the back-pressure chamber 314. A valve opening spring 337 is disposed between the main valve member 320 and the holder 331. The valve opening spring 337 is a compression coil spring. The valve opening spring 337 pushes the main valve member 320 upward.

The case 332 has a circular cylindrical shape. The case 332 includes a lower end disposed in the holder 331 and bonded to the holder 331. The fixed core 336 having a circular columnar shape is disposed in the upper end of the case 332. The fixed core 336 is bonded to the upper end of the case 332. The fixed core 336 includes a lower end surface on which a spring receiving member 336a is disposed.

The plunger 333 has a circular columnar shape. The plunger 333 is disposed in the case 332 and can move in the up-and-down direction. The plunger 333 includes an upper end surface on which a spring housing hole 333a is formed. A plunger spring 338 is disposed between a bottom surface 333b of the spring housing hole 333a and the spring receiving member 336a of the fixed core 336. The plunger spring 338 is a compression coil spring. The plunger spring 338 pushes the plunger 333 downward.

The electromagnetic coil 334 has a circular cylindrical shape. The case 332 is disposed in the electromagnetic coil 334. The electromagnetic coil 334 magnetizes the fixed core 336 and the plunger 333.

The pilot valve member 335 has a conical shape pointing downward. The pilot valve member 335 is connected integrally to the lower end surface of the plunger 333. The pilot valve member 335 is disposed in the back-pressure chamber 314. The pilot valve member 335 opens and closes the pilot passage 325.

In the first on-off valve unit 300, when the electromagnetic coil 334 is not energized, the plunger 333 is pushed and moved downward by the plunger spring 338. The pilot valve member 335 is also moved downward, closes the pilot passage 325, and pushes the main valve member 320 downward. The main valve member 320 comes into contact with the first valve seat 313, and the first valve port 312 closes. When the first valve port 312 closes, refrigerant in the first valve chamber 311 and the back-pressure chamber 314 is restricted from flowing to the first valve port 312. Refrigerant remains in the first valve chamber 311 and the back-pressure chamber 314. The main valve member 320 is pressed to the first valve seat 313 by refrigerant.

In the first on-off valve unit 300, when the electromagnetic coil 334 is energized, the plunger 333 is moved upward by magnetic force. The pilot valve member 335 is also moved upward, and the pilot passage 325 opens. Thus, refrigerant in the back-pressure chamber 314 flows through the pilot passage 325 to the first valve port 312. This causes pressure of refrigerant in the back-pressure chamber 314 to be lower than pressure of refrigerant in the first valve chamber 311. Additionally, the valve opening spring 337 pushes the main valve member 320 upward. As a result, the main valve member 320 is moved away from the first valve seat 313, and the first valve port 312 opens.

The second on-off valve unit 400 is disposed in the right surface 104, near the front surface 101. The second on-off valve unit 400 can open and close the first passage part 152a of the second refrigerant passage 152. That is, the second on-off valve unit 400 can change the passage area of the first passage part 152a to zero or to an area greater than zero.

The second on-off valve unit 400 constitutes a pilot-operated on-off valve together with the valve body 100. The second on-off valve unit 400 is a normally open valve. A second mounting hole 162 is formed on the right surface 104 of the valve body 100. The second on-off valve unit 400 is disposed in the second mounting hole 162. The valve body 100 has a second valve chamber 411, a second valve port 412 that is open to the second valve chamber 411, and a second valve seat 413 that encloses the second valve port 412, and these are in the second mounting hole 162. The second valve chamber 411 and the refrigerant passage 151a (Fig. 19 and Fig. 24) that extends from the first indoor-side opening 111 to the second valve chamber 411 are parts of the first refrigerant passage 151. The second valve chamber 411 and the refrigerant passage 151a are also parts of the second refrigerant passage 152. The second valve port 412 is a part of the second refrigerant passage 152.

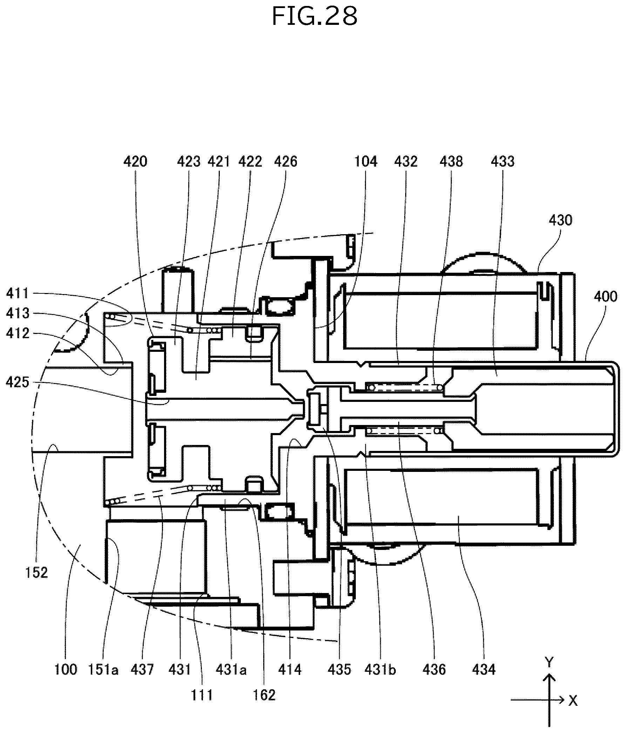

As illustrated in Fig. 28, the second on-off valve unit 400 includes a main valve member 420 and a valve-member driving section 430.

The main valve member 420 integrally includes a body portion 421, a first flange portion 422, and a second flange portion 423. The body portion 421 has a circular columnar shape. The first flange portion 422 has a circular annular shape. The inner peripheral edge of the first flange portion 422 is connected to the right end of the body portion 421. The second flange portion 423 has a circular annular shape. The inner peripheral edge of the second flange portion 423 is connected to the left end of the body portion 421. The body portion 421 includes a pilot passage 425. The first flange portion 422 includes a pressure equalizing passage 426. Packing has a circular annular plate-like shape and is provided in the second flange portion 423. The second valve port 412 closes when the main valve member 420 (specifically, the packing of the second flange portion 423) comes into contact with the second valve seat 413 and opens when the main valve member 420 moves away from the second valve seat 413. A valve opening spring 437 is disposed between the first flange portion 422 of the main valve member 420 and the valve body 100. The valve opening spring 437 is a compression coil spring. The valve opening spring 437 pushes the first flange portion 422 of the main valve member 420 rightward.

The valve-member driving section 430 includes a fixed core 431, a case 432, a plunger 433, an electromagnetic coil 434, a pilot valve member 435, and a valve shaft 436.

The fixed core 431 integrally includes a large-diameter cylindrical portion 431a and a small-diameter cylindrical portion 431b. The large-diameter cylindrical portion 431a is mounted on the inner circumferential surface of the second mounting hole 162 of the valve body 100 by a screw structure. The small-diameter cylindrical portion 431b is disposed coaxially with the large-diameter cylindrical portion 431a. The outer diameter of the small-diameter cylindrical portion 431b is smaller than the inner diameter of the large-diameter cylindrical portion 431a. The small-diameter cylindrical portion 431b projects from the right surface 104. The first flange portion 422 is disposed in the large-diameter cylindrical portion 431a and can move in the left-and-right direction. The first flange portion 422 separates a back-pressure chamber 414 in the large-diameter cylindrical portion 431a from the second valve chamber 411. The pilot passage 425 connects the back-pressure chamber 414 and the second valve port 412. The pressure equalizing passage 426 connects the second valve chamber 411 and the back-pressure chamber 414.

The case 432 has a circular cylindrical shape that is open at the left end and is closed at the right end. The small-diameter cylindrical portion 431b of the fixed core 431 is disposed in the left end of the case 432. The left end of the case 432 is bonded to the fixed core 431.

The plunger 433 has a circular cylindrical shape. The plunger 433 is disposed in the case 432 and can move in the left-and-right direction. A plunger spring 438 is disposed between the plunger 433 and the fixed core 431. The plunger spring 438 is a compression coil spring. The plunger spring 438 pushes the plunger 433 rightward.

The electromagnetic coil 434 has a circular cylindrical shape. The case 432 is disposed in the electromagnetic coil 434. The electromagnetic coil 434 magnetizes the fixed core 431 and the plunger 433.

The pilot valve member 435 is connected integrally to the left end of the valve shaft 436. The pilot valve member 435 is disposed in the back-pressure chamber 414. The pilot valve member 435 is connected to the plunger 433 via the valve shaft 436. Packing has a disc shape and is provided in the pilot valve member 435. The pilot valve member 435 opens and closes the pilot passage 425.

The valve shaft 436 has an elongated circular cylindrical shape. The valve shaft 436 has a right end that is secured to the left end of the plunger 433. The valve shaft 436 is disposed in the small-diameter cylindrical portion 431b of the fixed core 431. The valve shaft 436 is supported by the small-diameter cylindrical portion 431b and can move in the left-and-right direction.

In the second on-off valve unit 400, when the electromagnetic coil 434 is energized, the plunger 433 is moved leftward by magnetic force. The pilot valve member 435 is also moved leftward, closes the pilot passage 425, and pushes the main valve member 420 leftward. The main valve member 420 comes into contact with the second valve seat 413, and the second valve port 412 closes. When the second valve port 412 closes, refrigerant in the second valve chamber 411 and the back-pressure chamber 414 is restricted from flowing to the second valve port 412. Refrigerant remains in the second valve chamber 411 and the back-pressure chamber 414. The main valve member 420 is pressed to the second valve seat 413 by refrigerant.

In the second on-off valve unit 400, when the electromagnetic coil 434 is not energized, the plunger 433 is pushed and moved rightward by the plunger spring 438. The pilot valve member 435 is also moved rightward, and the pilot passage 425 opens. Thus, refrigerant in the back-pressure chamber 414 flows through the pilot passage 425 to the second valve port 412. This causes pressure of refrigerant in the back-pressure chamber 414 to be lower than pressure of refrigerant in the second valve chamber 411. Additionally, the valve opening spring 437 pushes the main valve member 420 rightward. As a result, the main valve member 420 is moved away from the second valve seat 413, and the second valve port 412 opens.

The third on-off valve unit 500 is disposed in the right surface 104, near the back surface 102. The third on-off valve unit 500 can open and close the sixth refrigerant passage 156. That is, the third on-off valve unit 500 can change the passage area of the sixth refrigerant passage 156 to zero or to an area greater than zero.

The third on-off valve unit 500 constitutes a pilot-operated on-off valve together with the valve body 100. The third on-off valve unit 500 is a normally open valve. A third mounting hole 163 is formed on the right surface 104 of the valve body 100. The third on-off valve unit 500 is disposed in the third mounting hole 163. The valve body 100 has a third valve chamber 511, a third valve port 512 that is open to the third valve chamber 511, and a third valve seat 513 that encloses the third valve port 512, and these are in the third mounting hole 163. The third valve chamber 511 and the refrigerant passage 154a (Fig. 19 and Fig. 23) that extends from the first outdoor-side opening 121 to the third valve chamber 511 are parts of the fourth refrigerant passage 154. The third valve chamber 511 and the refrigerant passage 154a are also parts of the sixth refrigerant passage 156. The third valve port 512 is a part of the sixth refrigerant passage 156. The sixth refrigerant passage 156 includes a connecting point 156c to which the seventh refrigerant passage 157 is connected. The refrigerant passage 156a (Fig. 22) that extends from the connecting point 156c to the third indoor-side opening 113 is a part of the sixth refrigerant passage 156. The refrigerant passage 156a is also a part of the seventh refrigerant passage 157.

The third on-off valve unit 500 includes a main valve member 520 and a valve-member driving section 530. The main valve member 520 includes a pilot passage 525 and a pressure equalizing passage 526. A fixed core of the valve-member driving section 530 is mounted on the inner circumferential surface of the third mounting hole 163 of the valve body 100 by a screw structure. In the third on-off valve unit 500, when an electromagnetic coil of the valve-member driving section 530 is energized, the main valve member 520 comes into contact with the third valve seat 513, and the third valve port 512 closes. In the third on-off valve unit 500, when the electromagnetic coil of the valve-member driving section 530 is not energized, the main valve member 520 moves away from the third valve seat 513, and the third valve port 512 opens. Since the third on-off valve unit 500 has the same (including substantially the same) configuration as that of the second on-off valve unit 400, its detailed description is omitted.

The flow control valve unit 600 is disposed in the upper surface 105, near the left surface 103. The flow control valve unit 600 can change, in a stepless manner (including a substantially stepless manner), the passage area of the second passage part 152b of the second refrigerant passage 152.

The flow control valve unit 600 constitutes a flow control valve together with the valve body 100. A fourth mounting hole 164 is formed on the upper surface 105 of the valve body 100. The flow control valve unit 600 is disposed in the fourth mounting hole 164. The valve body 100 has a fourth valve chamber 611, a fourth valve port 612 that is open to the fourth valve chamber 611, and a fourth valve seat 613 that encloses the fourth valve port 612, and these are in the fourth mounting hole 164. The fourth valve chamber 611 and the fourth valve port 612 are parts of the second refrigerant passage 152.

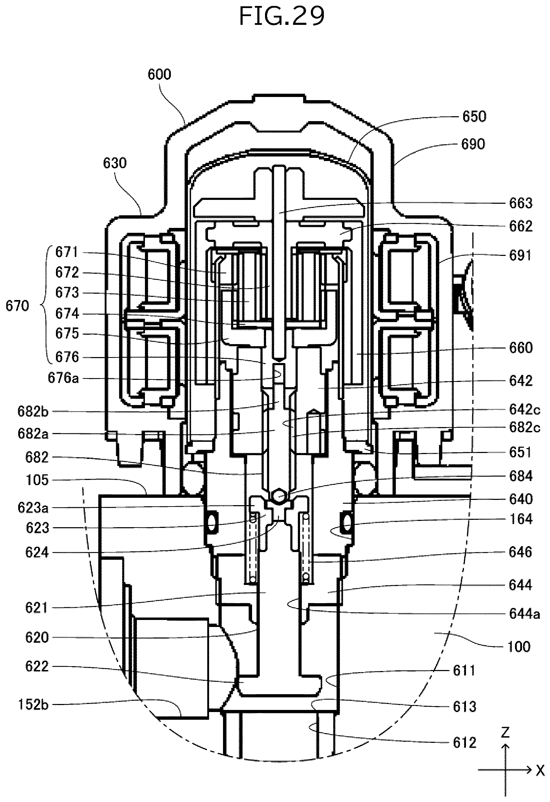

As illustrated in Fig. 29, the flow control valve unit 600 includes a valve member 620 and a valve-member driving section 630.

The valve member 620 includes a stem 621, a valve portion 622, a spring receiving portion 623, and a ball receiving portion 624. The stem 621 has a circular columnar shape. The valve portion 622 is disposed at the lower end of the stem 621. The valve portion 622 has a circular annular shape. The valve portion 622 protrudes radially outward from the outer circumferential surface of the stem 621. The spring receiving portion 623 is disposed at the upper end of the stem 621. The spring receiving portion 623 includes a flange 623a that protrudes radially outward. The ball receiving portion 624 includes a disc portion and a projecting portion formed on the lower surface of the disc portion. The projecting portion of the ball receiving portion 624 is fitted into a hole formed in the spring receiving portion 623. The valve portion 622 of the valve member 620 moves toward and away from the fourth valve port 612. This causes the opening area of the fourth valve port 612 (i.e., the passage area of the second passage part 152b of the second refrigerant passage 152) to be changed in the stepless manner.

The valve-member driving section 630 moves the valve member 620 in the up-and-down direction and moves the valve portion 622 toward and away from the fourth valve port 612. The valve-member driving section 630 includes a holder 640, a can 650, a rotor 660, a planetary gear mechanism 670, a driving shaft 682, a ball 684, and a stator unit 690.

The holder 640 is made of a metal such as an aluminum alloy. The holder 640 has a circular cylindrical shape. The holder 640 is mounted on the inner circumferential surface of the fourth mounting hole 164 by a screw structure. A driving-shaft supporting member 642 having a circular cylindrical shape is disposed in the upper part of the holder 640. The driving-shaft supporting member 642 includes an inner circumferential surface on which an internal thread 642c is formed, and the internal thread 642c is disposed in the lower part of the inner circumferential surface. A valve-member supporting member 644 is disposed between the lower end of the holder 640 and the valve body 100. The valve-member supporting member 644 has a circular cylindrical shape. The valve-member supporting member 644 has a valve-member supporting hole 644a. The valve-member supporting hole 644a extends through the valve-member supporting member 644 in the up-and-down direction. The stem 621 of the valve member 620 is disposed in the valve-member supporting hole 644a. A valve opening spring 646 is disposed between the flange 623a and the valve-member supporting member 644. The valve opening spring 646 is a compression coil spring. The valve opening spring 646 pushes the valve member 620 upward.

The can 650 has a circular cylindrical shape that is open at the lower end and is closed at the upper end. The lower end of the can 650 is bonded to the holder 640 via an annular member 651.

The rotor 660 has a circular cylindrical shape. The outer diameter of the rotor 660 is smaller than the inner diameter of the can 650. The rotor 660 is rotatably disposed in the can 650. The upper end of the rotor 660 is bonded to a connecting member 662 having a disc shape. The connecting member 662 closes the upper end of the rotor 660. A rotor shaft 663 extends through the center of the connecting member 662. The rotor 660 is connected to the rotor shaft 663 via the connecting member 662.

The planetary gear mechanism 670 includes a fixed ring gear 671, a sun gear 672, planetary gears 673, a carrier 674, an output gear 675, and an output shaft 676. The sun gear 672 is coupled coaxially to the connecting member 662. The sun gear 672 rotates together with the rotor 660 and the connecting member 662. The rotational speed of the sun gear 672 is reduced by the fixed ring gear 671, the planetary gears 673, the carrier 674, and the output gear 675, and the rotation is transmitted to the output shaft 676. The output shaft 676 is disposed in the driving-shaft supporting member 642.

The driving shaft 682 includes a circular columnar portion 682a and a flat plate portion 682b. The flat plate portion 682b is connected to the upper end of the circular columnar portion 682a. The circular columnar portion 682a and the flat plate portion 682b are integrally formed. The circular columnar portion 682a includes an outer circumferential surface on which an external thread 682c is formed. The external thread 682c is screwed into the internal thread 642c of the driving-shaft supporting member 642. The flat plate portion 682b is disposed in a slit 676a of the output shaft 676 and can move in the up-and-down direction. The driving shaft 682 is rotated by the output shaft 676, and a screw-feed action moves the driving shaft 682 in the up-and-down direction. The ball 684 is disposed between the driving shaft 682 and the ball receiving portion 624 of the valve member 620.

The stator unit 690 includes a stator 691 having a circular cylindrical shape. The can 650 is disposed in the stator 691. The stator 691 and the rotor 660 constitute a stepping motor.

In the flow control valve unit 600, a current is applied to the stator 691 to rotate the rotor 660 in one direction. The rotational speed of the rotor 660 is reduced by the planetary gear mechanism 670, and the driving shaft 682 is rotated by the output shaft 676. When the driving shaft 682 is rotated, the screw-feed action moves the driving shaft 682 downward. The driving shaft 682 pushes the valve member 620 downward via the ball 684. The valve member 620 moves downward, and the opening area of the fourth valve port 612 decreases. In the embodiment, the minimum opening area of the fourth valve port 612 is zero, that is, the fourth valve port 612 is in a fully closed state.

In the flow control valve unit 600, a current is applied to the stator 691 to rotate the rotor 660 in the other direction. The rotational speed of the rotor 660 is reduced by the planetary gear mechanism 670, and the driving shaft 682 is rotated by the output shaft 676. When the driving shaft 682 is rotated, the screw-feed action moves the driving shaft 682 upward. The valve member 620 is pushed by the valve opening spring 646 and moves upward, and the opening area of the fourth valve port 612 increases. When the fourth valve port 612 is in a fully open state, refrigerant flows through the fourth valve port 612 without expanding.

The second valve port 412 and the fourth valve port 612 are parts of the second refrigerant passage 152. The second refrigerant passage 152 includes a first part that extends leftward from the second valve port 412 and a second part that extends downward from the fourth valve port 612, and the second part is connected at a right angle to the first part. That is, a part of the second refrigerant passage 152 between the second valve port 412 and the fourth valve port 612 has an L shape (Fig. 14).

As illustrated in Fig. 21 and Fig. 24, the first check valve unit 700 is disposed in the third refrigerant passage 153. The first check valve unit 700 allows refrigerant to flow in the third refrigerant passage 153 from the first intermediate opening 131 to the second refrigerant passage 152 and restricts refrigerant from flowing in the third refrigerant passage 153 from the second refrigerant passage 152 to the first intermediate opening 131.

The first check valve unit 700 constitutes a check valve together with the valve body 100. The valve body 100 includes a valve seat 713 that has a circular annular tapered shape and that is disposed in the third refrigerant passage 153. The refrigerant passage 153a (Fig. 17 and Fig. 21) that extends upward from the first intermediate opening 131 is a part of the third refrigerant passage 153. The refrigerant passage 153a is also a part of the fifth refrigerant passage 155.

The first check valve unit 700 includes a valve member 720, a coil spring 730, and a holding member 740. The valve member 720 is disposed in the third refrigerant passage 153 and can move in a direction of refrigerant flow (the front-and-back direction). The valve member 720 includes a valve portion 721 having a circular annular shape. The coil spring 730 is disposed in the third refrigerant passage 153, and the center axis of the coil spring 730 is in the direction of the refrigerant flow. The first end of the coil spring 730 is connected to the valve member 720, and the second end of the coil spring 730 is held by the holding member 740 secured to the valve body 100. The valve member 720 is pushed backward by the coil spring 730. The valve member 720 moves backward, bringing the valve portion 721 into contact with the valve seat 713.

When pressure of refrigerant at the first intermediate opening 131 is higher than pressure of refrigerant at the connecting point 152c in the second refrigerant passage 152, the valve member 720 is pushed forward by refrigerant, and the coil spring 730 is compressed. Then, the valve portion 721 moves away from the valve seat 713, and the third refrigerant passage 153 opens. As a result, refrigerant is allowed to flow in the third refrigerant passage 153 from the first intermediate opening 131 to the second refrigerant passage 152.

When pressure of refrigerant at the first intermediate opening 131 is lower than or equal to pressure of refrigerant at the connecting point 152c in the second refrigerant passage 152, the coil spring 730 is released, and the valve member 720 is pushed backward by the coil spring 730. Then, the valve portion 721 comes into contact with the valve seat 713, and the third refrigerant passage 153 closes. As a result, refrigerant is restricted from flowing in the third refrigerant passage 153 from the second refrigerant passage 152 to the first intermediate opening 131.

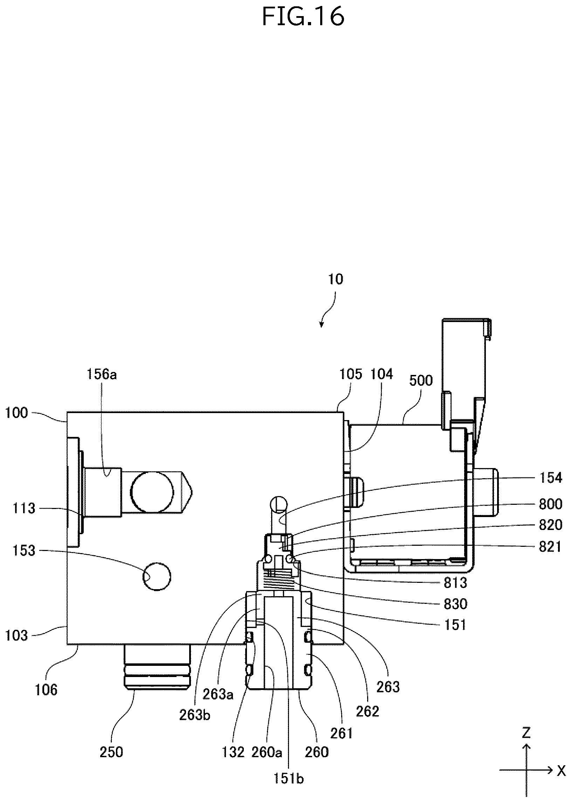

As illustrated in Fig. 16 and Fig. 19, the second check valve unit 800 is disposed in the fourth refrigerant passage 154. The second check valve unit 800 allows refrigerant to flow in the fourth refrigerant passage 154 from the first outdoor-side opening 121 to the second intermediate opening 132 and restricts refrigerant from flowing in the fourth refrigerant passage 154 from the second intermediate opening 132 to the first outdoor-side opening 121.

The second check valve unit 800 constitutes a check valve together with the valve body 100. The valve body 100 includes a valve seat 813 that has a circular annular tapered shape and that is disposed in the fourth refrigerant passage 154. The refrigerant passage 151b (Fig. 16 and Fig. 19) that extends upward from the second intermediate opening 132 is a part of the first refrigerant passage 151. The refrigerant passage 151b is also a part of the fourth refrigerant passage 154.

The second check valve unit 800 includes a valve member 820 and a coil spring 830. The valve member 820 is disposed in the fourth refrigerant passage 154 and can move in a direction of refrigerant flow (the up-and-down direction). The valve member 820 includes a valve portion 821 having a circular annular shape. The coil spring 830 is disposed in the fourth refrigerant passage 154, and the center axis of the coil spring 830 is in the direction of the refrigerant flow. The first end of the coil spring 830 is connected to the valve member 820, and the second end of the coil spring 830 is held by a second joint member 260 that is disposed in the refrigerant passage 151b. The valve member 820 is pushed upward by the coil spring 830. The valve member 820 moves upward, bringing the valve portion 821 into contact with the valve seat 813.

When pressure of refrigerant at the first outdoor-side opening 121 is higher than pressure of refrigerant at the second intermediate opening 132, the valve member 820 is pushed downward by refrigerant, and the coil spring 830 is compressed. Then, the valve portion 821 moves away from the valve seat 813, and the fourth refrigerant passage 154 opens. As a result, refrigerant is allowed to flow in the fourth refrigerant passage 154 from the first outdoor-side opening 121 to the second intermediate opening 132.

When pressure of refrigerant at the first outdoor-side opening 121 is lower than or equal to pressure of refrigerant at the second intermediate opening 132, the coil spring 830 is released, and the valve member 820 is pushed upward by the coil spring 830. Then, the valve portion 821 comes into contact with the valve seat 813, and the fourth refrigerant passage 154 closes. As a result, refrigerant is restricted from flowing in the fourth refrigerant passage 154 from the second intermediate opening 132 to the first outdoor-side opening 121.

The receiver drier 20 separates refrigerant into gas and liquid phases and stores an excess of liquid-phase refrigerant. Additionally, the receiver drier 20 removes moisture from refrigerant. As illustrated in Fig. 30 to Fig. 32, the receiver drier 20 includes a receiver drier body 210 and a lid member 220. The receiver drier body 210 and the lid member 220 are made of a metal such as an aluminum alloy.

The receiver drier body 210 has a circular cylindrical shape that is open at the upper end and is closed at the lower end. The receiver drier body 210 contains a desiccant, which is not illustrated, for removing moisture from refrigerant.

The lid member 220 has a disc shape. The lid member 220 has a first connecting hole 231, a second connecting hole 232, a first screw hole 271, and a second screw hole 272.

The first connecting hole 231 is formed to correspond to the first intermediate opening 131 of the valve body 100. The diameter of the first connecting hole 231 is equal to the diameter of the first intermediate opening 131. The second connecting hole 232 is formed to correspond to the second intermediate opening 132 of the valve body 100. The diameter of the second connecting hole 232 is equal to the diameter of the second intermediate opening 132. The first connecting hole 231 and the second connecting hole 232 communicate with an inner space of the receiver drier body 210 directly or indirectly via pipes that are not illustrated.

The first screw hole 271 is formed to correspond to the first through hole 171 of the valve body 100. The second screw hole 272 is formed to correspond to the second through hole 172 of the valve body 100.

The first connecting hole 231 is connected to the first intermediate opening 131 via a first joint member 250. The first joint member 250 has a circular cylindrical shape. The first joint member 250 includes a first part 251 and a second part 252 that are connected in this sequence from bottom to top.

The first part 251 and the second part 252 are connected in the axial direction of the first joint member 250. The outer diameter of the first part 251 is equal to the diameter of the first connecting hole 231. The first part 251 is disposed in the first connecting hole 231. A seal (such as a rubber O-ring) is disposed between the first part 251 and the inner circumferential surface of the first connecting hole 231. The outer diameter of the second part 252 is equal to the diameter of the first intermediate opening 131. The second part 252 is disposed in the refrigerant passage 153a that extends upward from the first intermediate opening 131. A seal is disposed between the second part 252 and the inner circumferential surface of the refrigerant passage 153a. Refrigerant in the receiver drier body 210 flows through the first connecting hole 231 and an inner space 250a of the first joint member 250 into the refrigerant passage 153a (the third refrigerant passage 153 and the fifth refrigerant passage 155).

The second connecting hole 232 is connected to the second intermediate opening 132 via the second joint member 260. The second joint member 260 has a circular cylindrical shape that is open at the lower end and is closed at the upper end. The second joint member 260 includes a first part 261, a second part 262, and a third part 263 that are connected in this sequence from bottom to top.

The first part 261, the second part 262, and the third part 263 are connected in the axial direction of the second joint member 260. The outer diameter of the first part 261 is equal to the diameter of the second connecting hole 232. The first part 261 is disposed in the second connecting hole 232. A seal is disposed between the first part 261 and the inner circumferential surface of the second connecting hole 232. The outer diameter of the second part 262 is equal to the diameter of the second intermediate opening 132. The second part 262 is disposed in the refrigerant passage 151b that extends upward from the second intermediate opening 132. A seal is disposed between the second part 262 and the inner circumferential surface of the refrigerant passage 151b. The third part 263 includes a peripheral wall portion 263a and an upper wall portion 263b. The lower end of the peripheral wall portion 263a is connected to the second part 262. The outer diameter of the peripheral wall portion 263a is smaller than the outer diameter of the second part 262. The upper wall portion 263b is connected to the upper end of the peripheral wall portion 263a. The peripheral wall portion 263a has a through hole and the upper wall portion 263b has a through hole. Refrigerant in the refrigerant passage 151b (the first refrigerant passage 151 and the fourth refrigerant passage 154) flows through the through holes of the third part 263, an inner space 260a of the second joint member 260, and the second connecting hole 232 into the inner space of the receiver drier body 210.

The upper wall portion 263b of the third part 263 of the second joint member 260 holds the second end of the coil spring 830 of the second check valve unit 800.

An example of a method for manufacturing the valve device 5 is described below with reference to Fig. 33 and Fig. 34.

The valve body 100 is manufactured by forming the openings, the refrigerant passages, the first through hole 171, and the second through hole 172 in a workpiece having the rectangular parallelepiped shape. Then, the first check valve unit 700 and the second check valve unit 800 are mounted in the valve body 100 (Fig. 33).

The lid member 220 is manufactured by forming the first connecting hole 231, the second connecting hole 232, the first screw hole 271, and the second screw hole 272 in a workpiece having the disc shape. The receiver drier body 210 is manufactured by metal drawing. The desiccant, which is not illustrated, is placed in the receiver drier body 210, and the lid member 220 is then welded to the upper end of the receiver drier body 210 (Fig. 33).

The first part 251 of the first joint member 250 is inserted into the first connecting hole 231 of the lid member 220, and the second part 252 is inserted into the first intermediate opening 131 (the refrigerant passage 153a) of the valve body 100. The first part 261 of the second joint member 260 is inserted into the second connecting hole 232 of the lid member 220, and the second part 262 and the third part 263 are inserted into the second intermediate opening 132 (the refrigerant passage 151b) of the valve body 100. The lid member 220 is brought into contact with the lower surface 106 of the valve body 100. Consequently, the entire first joint member 250 and the entire second joint member 260 are disposed in the valve body 100 and in the lid member 220. Bolts 7 are inserted into the first through hole 171 and the second through hole 172 of the valve body 100 from the upper surface 105 side. The bolts 7 are screwed into the first screw hole 271 and the second screw hole 272, and the valve body 100 and the lid member 220 are fastened by the bolts 7 (Fig. 34).

The first on-off valve unit 300 is mounted on the valve body 100 at the first mounting hole 161. The second on-off valve unit 400 is mounted on the valve body 100 at the second mounting hole 162. The third on-off valve unit 500 is mounted on the valve body 100 at the third mounting hole 163. The flow control valve unit 600 is mounted on the valve body 100 at the fourth mounting hole 164. This results in the completion of the valve device 5.

As illustrated in Fig. 1, the compressor 30 includes a discharge port connected to an inlet of the indoor condenser 40 via a pipe P1. The compressor 30 sucks and compresses refrigerant, and the compressor 30 discharges refrigerant in a high-temperature and high-pressure state. The indoor condenser 40 emits heat of refrigerant discharged by the compressor 30. The indoor condenser 40 heats air blown into the cabin of the vehicle. The indoor condenser 40 includes an outlet connected to the first indoor-side opening 111 of the valve device 5 via a pipe P2. In the indoor evaporator 50, heat exchange occurs between refrigerant flowing in the indoor evaporator 50 and air blown into the cabin of the vehicle. The indoor evaporator 50 cools air blown into the cabin of the vehicle. The indoor evaporator 50 includes an outlet connected to the fourth indoor-side opening 114 via a pipe P3. The indoor evaporator 50 includes an inlet connected to the second indoor-side opening 112 of the valve device 5 via a pipe P4. The flow control valve 70 is disposed in the pipe P4. The flow control valve 70 can change the passage area of the pipe P4 in a stepless manner. In the outdoor heat exchanger 60, heat exchange occurs between refrigerant flowing in the outdoor heat exchanger 60 and air outside the outdoor heat exchanger 60. The outdoor heat exchanger 60 includes an outlet connected to the first outdoor-side opening 121 of the valve device 5 via a pipe P5. The outdoor heat exchanger 60 includes an inlet connected to the second outdoor-side opening 122 of the valve device 5 via a pipe P6. The third indoor-side opening 113 of the valve device 5 is connected to a suction port of the compressor 30 via a pipe P7. The pipes P1 to P7 are refrigerant passages.

The air conditioning device 1 includes a controller that is not illustrated. The controller controls the compressor 30, the valve device 5 (the first on-off valve unit 300, the second on-off valve unit 400, the third on-off valve unit 500, and the flow control valve unit 600), and the flow control valve 70. The air conditioning device 1 includes the heating operation mode, the cooling operation mode, and the dehumidification heating operation mode.

The heating operation mode, the cooling operation mode, and the dehumidification heating operation mode are described with reference to Fig. 2 to Fig. 4 and Fig. 35 to Fig. 38. In Fig. 2 to Fig. 4, the first on-off valve unit 300, the second on-off valve unit 400, the third on-off valve unit 500, the flow control valve unit 600, and the flow control valve 70 are illustrated, with hatching used to indicate a valve closing state for some of them.

In the heating operation mode, the controller of the air conditioning device 1 opens the first refrigerant passage 151 by using the first on-off valve unit 300 of the valve device 5. The controller closes the first passage part 152a of the second refrigerant passage 152 by using the second on-off valve unit 400 of the valve device 5. The controller opens the second passage part 152b of the second refrigerant passage 152 and controls the passage area of the second passage part 152b into a size capable of expanding refrigerant, by using the flow control valve unit 600 of the valve device 5. The controller opens the sixth refrigerant passage 156 by using the third on-off valve unit 500 of the valve device 5. The controller closes the pipe P4 by using the flow control valve 70. Then, the controller operates the compressor 30 to circulate refrigerant. As illustrated in Fig. 2, in the heating operation mode, refrigerant flows through the compressor 30, the indoor condenser 40, the first refrigerant passage 151 (the first on-off valve unit 300), the receiver drier 20, the third refrigerant passage 153 (the first check valve unit 700), the second passage part 152b of the second refrigerant passage 152 (the flow control valve unit 600), the outdoor heat exchanger 60, and the sixth refrigerant passage 156 (the third on-off valve unit 500) in this sequence and then returns to the compressor 30. The flow control valve unit 600 functions as a heating expansion valve. Consequently, refrigerant expanded by the flow control valve unit 600 flows into the outdoor heat exchanger 60. In the heating operation mode, air is not cooled by the indoor evaporator 50, but is rather heated by the indoor condenser 40, and is then blown into the cabin of the vehicle.

As illustrated in Fig. 35 and Fig. 36, in the heating operation mode, refrigerant RF1 flowing through the first refrigerant passage 151 includes high-temperature gas and liquid (high-temperature fluid that exists in both gas and liquid phases). Refrigerant RF3 flowing through the third refrigerant passage 153 is a medium-temperature liquid with a lower temperature than refrigerant RF1. Refrigerant RF2 flowing through the second passage part 152b of the second refrigerant passage 152 includes low-temperature gas and liquid (low-temperature fluid that exists in both gas and liquid phases) with a lower temperature than refrigerant RF3. Refrigerant RF6 flowing through the sixth refrigerant passage 156 is a low-temperature gas with a lower temperature than refrigerant RF3. That is, in the heating operation mode, the first refrigerant passage 151 serves as a high-temperature refrigerant passage, the third refrigerant passage 153 serves as a medium-temperature refrigerant passage, and the sixth refrigerant passage 156 serves as a low-temperature refrigerant passage. Refrigerant RF3 with a medium temperature flows into the flow control valve unit 600 that serves as the heating expansion valve. Therefore, refrigerant RF6 with a low temperature flowing through the sixth refrigerant passage 156 can suppress the temperature of the valve body 100 from increasing. Consequently, the heating of refrigerant RF3 with the medium temperature by refrigerant RF1 with a high temperature through the valve body 100 can be inhibited. Additionally, minimum distance D1 between the third refrigerant passage 153 and the sixth refrigerant passage 156 is shorter than minimum distance D2 between the third refrigerant passage 153 and the first refrigerant passage 151. Therefore, refrigerant RF6 with the low temperature flows closer to refrigerant RF3 with the medium temperature than refrigerant RF1 with the high temperature. Consequently, the heating of refrigerant RF3 with the medium temperature by refrigerant RF1 with the high temperature through the valve body 100 can be more effectively inhibited. As a result, the heating efficiency of the air conditioning device 1 can be increased, and noise caused when refrigerant RF3 with the medium temperature flows through the flow control valve unit 600 can be reduced. Refrigerant RF6 with the low temperature is heated due to heat absorption from the valve body 100. As a result, the compressor 30 can efficiently bring refrigerant RF6 with the low temperature into a high-temperature and high-pressure state.

In the cooling operation mode, the controller of the air conditioning device 1 closes the first refrigerant passage 151 by using the first on-off valve unit 300 of the valve device 5. The controller opens the first passage part 152a of the second refrigerant passage 152 by using the second on-off valve unit 400 of the valve device 5. The controller opens the second passage part 152b of the second refrigerant passage 152 and maximizes the passage area (the fully open state) of the second passage part 152b, by using the flow control valve unit 600 of the valve device 5. The controller closes the sixth refrigerant passage 156 by using the third on-off valve unit 500 of the valve device 5. The controller opens the pipe P4 and controls the passage area of the pipe P4 into a size capable of expanding refrigerant, by using the flow control valve 70. In the cooling operation mode, it is necessary to control the passage area of the second passage part 152b into a size that inhibits expansion of refrigerant. Then, the controller operates the compressor 30 to circulate refrigerant. As illustrated in Fig. 3, in the cooling operation mode, refrigerant flows through the compressor 30, the indoor condenser 40, the second refrigerant passage 152 (the second on-off valve unit 400 and the flow control valve unit 600), the outdoor heat exchanger 60, the fourth refrigerant passage 154 (the second check valve unit 800), the receiver drier 20, the fifth refrigerant passage 155, the flow control valve 70, the indoor evaporator 50, and the seventh refrigerant passage 157 in this sequence and then returns to the compressor 30. The flow control valve 70 functions as a cooling expansion valve. Consequently, refrigerant expanded by the flow control valve 70 flows into the indoor evaporator 50. In the cooling operation mode, air is cooled by the indoor evaporator 50 and is then blown into the cabin of the vehicle.

As illustrated in Fig. 37 and Fig. 38, in the cooling operation mode, refrigerant RF2 flowing through the second refrigerant passage 152 is a high-temperature gas. Refrigerant RF4 flowing through the fourth refrigerant passage 154 includes high-temperature gas and liquid. Refrigerant RF5 flowing through the fifth refrigerant passage 155 is a medium-temperature liquid with a lower temperature than refrigerant RF2 and refrigerant RF4. Refrigerant RF7 flowing through the seventh refrigerant passage 157 is a low-temperature gas with a lower temperature than refrigerant RF5. That is, in the cooling operation mode, the second refrigerant passage 152 and the fourth refrigerant passage 154 each serve as a high-temperature refrigerant passage, the fifth refrigerant passage 155 serves as a medium-temperature refrigerant passage, and the seventh refrigerant passage 157 serves as a low-temperature refrigerant passage. Refrigerant RF5 with a medium temperature flows into the flow control valve 70 that serves as the cooling expansion valve. Therefore, refrigerant RF7 with a low temperature flowing through the seventh refrigerant passage 157 can suppress the temperature of the valve body 100 from increasing. Consequently, the heating of refrigerant RF5 with the medium temperature by refrigerant RF2 with a high temperature and refrigerant RF4 with a high temperature through the valve body 100 can be inhibited. Additionally, minimum distance D1 between the fifth refrigerant passage 155 and the seventh refrigerant passage 157 is shorter than minimum distance D3 between the fifth refrigerant passage 155 and the fourth refrigerant passage 154. Therefore, refrigerant RF7 with the low temperature flows closer to refrigerant RF5 with the medium temperature than refrigerant RF4 with the high temperature. Consequently, the heating of refrigerant RF5 with the medium temperature by refrigerant RF4 with the high temperature through the valve body 100 can be more effectively inhibited. As a result, the cooling efficiency of the air conditioning device 1 can be increased, and noise caused when refrigerant RF5 with the medium temperature flows through the flow control valve 70 can be reduced. Refrigerant RF7 with the low temperature is heated due to heat absorption from the valve body 100. As a result, the compressor 30 can efficiently bring refrigerant RF7 with the low temperature into a high-temperature and high-pressure state.

In the dehumidification heating operation mode, the controller of the air conditioning device 1 opens the first refrigerant passage 151 by using the first on-off valve unit 300 of the valve device 5. The controller closes the first passage part 152a of the second refrigerant passage 152 by using the second on-off valve unit 400 of the valve device 5. The controller opens the second passage part 152b of the second refrigerant passage 152 and controls the passage area of the second passage part 152b into a size capable of expanding refrigerant, by using the flow control valve unit 600 of the valve device 5. The controller opens the sixth refrigerant passage 156 by using the third on-off valve unit 500 of the valve device 5. The controller opens the pipe P4 and controls the passage area of the pipe P4 into a size capable of expanding refrigerant by using the flow control valve 70. Then, the controller operates the compressor 30 to circulate refrigerant. As illustrated in Fig. 4, in the dehumidification heating operation mode, refrigerant flows through the compressor 30, the indoor condenser 40, the first refrigerant passage 151 (the first on-off valve unit 300), the receiver drier 20, the third refrigerant passage 153 (the first check valve unit 700), the second passage part 152b of the second refrigerant passage 152 (the flow control valve unit 600), the outdoor heat exchanger 60, and the sixth refrigerant passage 156 (the third on-off valve unit 500) in this sequence and then returns to the compressor 30. Additionally, a part of refrigerant flows from the receiver drier 20 through the fifth refrigerant passage 155, the flow control valve 70, the indoor evaporator 50, and the seventh refrigerant passage 157 and then returns to the compressor 30. Consequently, refrigerant expanded by the flow control valve unit 600 flows into the outdoor heat exchanger 60, and refrigerant expanded by the flow control valve 70 flows into the indoor evaporator 50. In the dehumidification heating operation mode, air is cooled (dehumidified) by the indoor evaporator 50, is heated by the indoor condenser 40, and is then blown into the cabin of the vehicle.

In the dehumidification heating operation mode, refrigerant RF1 flowing through the first refrigerant passage 151 includes high-temperature gas and liquid. Refrigerant RF3 flowing through the third refrigerant passage 153 is a medium-temperature liquid with a lower temperature than refrigerant RF1. Refrigerant RF2 flowing through the second passage part 152b of the second refrigerant passage 152 includes low-temperature gas and liquid with a lower temperature than refrigerant RF3. Refrigerant RF6 flowing through the sixth refrigerant passage 156 is a low-temperature gas with a lower temperature than refrigerant RF3. Refrigerant RF5 flowing through the fifth refrigerant passage 155 is a medium-temperature liquid with a lower temperature than refrigerant RF1. Refrigerant RF7 flowing through the seventh refrigerant passage 157 is a low-temperature gas with a lower temperature than refrigerant RF5. That is, in the dehumidification heating operation mode, the first refrigerant passage 151 serves as a high-temperature refrigerant passage, the third refrigerant passage 153 and the fifth refrigerant passage 155 each serve as a medium-temperature refrigerant passage, and the sixth refrigerant passage 156 and the seventh refrigerant passage 157 each serve as a low-temperature refrigerant passage. Therefore, refrigerant RF6 with a low temperature and refrigerant RF7 with a low temperature can suppress the temperature of the valve body 100 from increasing. Consequently, the heating of refrigerant RF3 with a medium temperature and refrigerant RF5 with a medium temperature by refrigerant RF1 with a high temperature through the valve body 100 can be inhibited. As a result, the dehumidification heating efficiency of the air conditioning device 1 can be increased. Furthermore, noise caused when refrigerant RF3 with the medium temperature flows through the flow control valve unit 600 can be reduced, and also noise caused when refrigerant RF5 with the medium temperature flows through the flow control valve 70 can be reduced.

The valve device 5 according to the embodiment includes the valve body 100 including the refrigerant passages and the valve units mounted on or in the valve body 100. This enables refrigerant leakage at connecting points of refrigerant passages and connecting points of the refrigerant passages and the valve units to be suppressed while reducing the number of connecting components.

In the valve device 5, the refrigerant passages of the valve body 100 include a high-temperature refrigerant passage through which high-temperature refrigerant flows, a medium-temperature refrigerant passage through which medium-temperature refrigerant with a lower temperature than the high-temperature refrigerant flows, and a low-temperature refrigerant passage through which low-temperature refrigerant with a lower temperature than the medium-temperature refrigerant flows. Therefore, low-temperature refrigerant flowing through the low-temperature refrigerant passage can suppress the temperature of the valve body 100 from increasing. Consequently, the heating of medium-temperature refrigerant by high-temperature refrigerant through the valve body 100 can be inhibited in the valve device 5. As a result, refrigerant leakage and a reduction in the cooling and heating efficiency can be suppressed.

The valve device 5 is used in the air conditioning device 1. The air conditioning device 1 includes the compressor 30, the indoor condenser 40 arranged downstream of the compressor 30, the outdoor heat exchanger 60, the flow control valve 70, and the indoor evaporator 50 arranged downstream of the flow control valve 70. The valve device 5 includes the receiver drier 20.

The outer surface of the valve body 100 has the first indoor-side opening 111, the second indoor-side opening 112, the third indoor-side opening 113, the fourth indoor-side opening 114, the first outdoor-side opening 121, the second outdoor-side opening 122, the first intermediate opening 131, and the second intermediate opening 132. The refrigerant passages include the first refrigerant passage 151 connecting the first indoor-side opening 111 and the second intermediate opening 132, the second refrigerant passage 152 connecting the first indoor-side opening 111 and the second outdoor-side opening 122, the third refrigerant passage 153 connecting the first intermediate opening 131 and the second refrigerant passage 152, the fourth refrigerant passage 154 connecting the first outdoor-side opening 121 and the second intermediate opening 132, the fifth refrigerant passage 155 connecting the first intermediate opening 131 and the second indoor-side opening 112, the sixth refrigerant passage 156 connecting the first outdoor-side opening 121 and the third indoor-side opening 113, and the seventh refrigerant passage 157 connecting the fourth indoor-side opening 114 and the third indoor-side opening 113. The second refrigerant passage 152 includes the first passage part 152a between the first indoor-side opening 111 and the connecting point 152c to which the third refrigerant passage 153 is connected, and the second passage part 152b between the second outdoor-side opening 122 and the connecting point 152c. The valve units include the first on-off valve unit 300 configured to open and close the first refrigerant passage 151, the second on-off valve unit 400 configured to open and close the first passage part 152a of the second refrigerant passage 152, the third on-off valve unit 500 configured to open and close the sixth refrigerant passage 156, the flow control valve unit 600 configured to change, in the stepless manner, the passage area of the second passage part 152b of the second refrigerant passage 152, the first check valve unit 700 that allows refrigerant to flow in the third refrigerant passage 153 from the first intermediate opening 131 to the second refrigerant passage 152 and restricts refrigerant from flowing in the third refrigerant passage 153 from the second refrigerant passage 152 to the first intermediate opening 131, and the second check valve unit 800 that allows refrigerant to flow in the fourth refrigerant passage 154 from the first outdoor-side opening 121 to the second intermediate opening 132 and restricts refrigerant from flowing in the fourth refrigerant passage 154 from the second intermediate opening 132 to the first outdoor-side opening 121. The first indoor-side opening 111 is connected to the outlet of the indoor condenser 40. The second indoor-side opening 112 is connected to the flow control valve 70. The third indoor-side opening 113 is connected to the suction port of the compressor 30. The fourth indoor-side opening 114 is connected to the outlet of the indoor evaporator 50. The first outdoor-side opening 121 is connected to the outlet of the outdoor heat exchanger 60. The second outdoor-side opening 122 is connected to the inlet of the outdoor heat exchanger 60. The first intermediate opening 131 is connected to the first connecting hole 231 that serves as an outlet of the receiver drier 20. The second intermediate opening 132 is connected to the second connecting hole 232 that serves as an inlet of the receiver drier 20.

In the heating operation mode, the first refrigerant passage 151 serves as the high-temperature refrigerant passage, the third refrigerant passage 153 serves as the medium-temperature refrigerant passage, and the sixth refrigerant passage 156 serves as the low-temperature refrigerant passage. In the cooling operation mode, the second refrigerant passage 152 and the fourth refrigerant passage 154 each serve as the high-temperature refrigerant passage, the fifth refrigerant passage 155 serves as the medium-temperature refrigerant passage, and the seventh refrigerant passage 157 serves as the low-temperature refrigerant passage. In the heating operation mode, the first on-off valve unit 300 opens the first refrigerant passage 151, the second on-off valve unit 400 closes the first passage part 152a, the flow control valve unit 600 opens the second passage part 152b and controls the passage area of the second passage part 152b into a size capable of expanding refrigerant, the third on-off valve unit 500 opens the sixth refrigerant passage 156, and the flow control valve 70 closes the pipe P4 connecting the second indoor-side opening 112 and the inlet of the indoor evaporator 50. In the cooling operation mode, the first on-off valve unit 300 closes the first refrigerant passage 151, the second on-off valve unit 400 opens the first passage part 152a, the flow control valve unit 600 opens the second passage part 152b and maximizes the passage area of the second passage part 152b, the third on-off valve unit 500 closes the sixth refrigerant passage 156, and the flow control valve 70 opens the pipe P4 and controls the passage area of the pipe P4 into a size capable of expanding refrigerant. With this configuration, in the heating operation mode, low-temperature refrigerant flowing through the sixth refrigerant passage 156 can suppress the temperature of the valve body 100 from increasing. In the cooling operation mode, low-temperature refrigerant flowing through the seventh refrigerant passage 157 can suppress the temperature of the valve body 100 from increasing. As a result, a reduction in the cooling and heating efficiency can be suppressed.

The third indoor-side opening 113 is adjacent to the second indoor-side opening 112. In the cooling operation mode, the third indoor-side opening 113 is an outlet of the seventh refrigerant passage 157 that serves as the low-temperature refrigerant passage, and the second indoor-side opening 112 is an outlet of the fifth refrigerant passage 155 that serves as the medium-temperature refrigerant passage. Therefore, the seventh refrigerant passage 157 is disposed close to the fifth refrigerant passage 155. Consequently, medium-temperature refrigerant flowing through the fifth refrigerant passage 155 can be cooled by low-temperature refrigerant flowing through the seventh refrigerant passage 157.

The third indoor-side opening 113 is between the second outdoor-side opening 122 and the second indoor-side opening 112. In the cooling operation mode, the third indoor-side opening 113 is the outlet of the seventh refrigerant passage 157 that serves as the low-temperature refrigerant passage, the second outdoor-side opening 122 is an outlet of the second refrigerant passage 152 that serves as the high-temperature refrigerant passage, and the second indoor-side opening 112 is the outlet of the fifth refrigerant passage 155 that serves as the medium-temperature refrigerant passage. Therefore, the seventh refrigerant passage 157 is disposed between the second refrigerant passage 152 and the fifth refrigerant passage 155. Consequently, the heating of medium-temperature refrigerant flowing through the fifth refrigerant passage 155 by high-temperature refrigerant flowing through the second refrigerant passage 152 can be more effectively inhibited.

The valve device 5 includes the valve module 10 and the receiver drier 20. The valve module 10 includes the valve body 100 including the refrigerant passages and the valve units mounted on or in the valve body 100. The receiver drier 20 includes the receiver drier body 210 having the cylindrical shape and configured to store refrigerant and the lid member 220 bonded to the upper end of the receiver drier body 210. The lid member 220 is in contact with the valve body 100. With this configuration, the receiver drier 20 is positioned closest to the valve module 10. This enables the size of the valve device 5 to be reduced.

The lid member 220 has the first screw hole 271 and the second screw hole 272. The valve body 100 has the first through hole 171 formed to correspond to the first screw hole 271 and the second through hole 172 formed to correspond to the second screw hole 272. The lid member 220 is mounted on the valve body 100 by the bolt 7 extending through the first through hole 171 and screwed into the first screw hole and the bolt 7 extending through the second through hole 172 and screwed into the second screw hole 272. With this configuration, the lid member 220 of the receiver drier 20 can be mounted securely on the valve body 100 in a comparatively simple structure.

Fig. 39 and Fig. 40 illustrate examples of modifications of the valve module 10 of the valve device 5.

A valve module 10 in Fig. 39 includes a refrigerant passage 156a that is shared by a sixth refrigerant passage 156 and a seventh refrigerant passage 157, and grooves 191 are formed in the refrigerant passage 156a. The grooves 191 extend in the inner peripheral direction of the refrigerant passage 156a and have a circular shape or a C shape. The existence of the grooves 191 increases the area of the inner surface of the refrigerant passage 156a. Therefore, the grooves 191 facilitate heat exchange between low-temperature refrigerant flowing through the refrigerant passage 156a and a valve body 100, which more effectively suppresses the temperature of the valve body 100 from increasing.

A valve module 10 in Fig. 40 includes a refrigerant passage 156a in which a heat exchange member 192 is provided. The heat exchange member 192 has a circular cylindrical shape. The outer peripheral surface of the heat exchange member 192 is in close contact with the inner surface of the refrigerant passage 156a. Refrigerant flows inside the heat exchange member 192. The heat exchange member 192 is made of, for example, copper. The heat exchange member 192 has a higher thermal conductivity than a valve body 100 made of an aluminum alloy. Therefore, the heat exchange member 192 facilitates heat exchange between low-temperature refrigerant flowing through the refrigerant passage 156a and the valve body 100, which more effectively suppresses the temperature of the valve body 100 from increasing. The grooves 191 serve as a heat exchange mechanism, and the heat exchange member 192 also serves as a heat exchange mechanism.

In the valve device 5 according to the embodiment, the positions of the openings (the first indoor-side opening 111, the second indoor-side opening 112, the third indoor-side opening 113, the fourth indoor-side opening 114, the first outdoor-side opening 121, and the second outdoor-side opening 122) on the outer surface of the valve body 100 are decided to minimize the size (volume) of the valve device 5. Appropriate change of the positions of the openings and piping layout may reduce the size of and the space occupied by the air conditioning device 1.

The valve device 5 described above has a configuration in which each valve unit is controlled by the controller of the system in which the valve device 5 is installed. Another configuration in which, for example, the valve device 5 includes a control unit may be employed. In this configuration, the control unit receives all signals from the system and centrally controls the valve units.

Additionally, the first on-off valve unit 300 of the valve device 5 described above is the pilot-operated on-off valve unit that is operated by electromagnetic force and requires energization to maintain the valve opening state where the first valve port 312 is open. The second on-off valve unit 400 is the pilot-operated on-off valve unit that is operated by electromagnetic force and requires energization to maintain the valve closing state where the second valve port 412 is closed. The third on-off valve unit 500 has the same (substantially the same) configuration as that of the second on-off valve unit 400. Instead of these on-off valve units, the valve device 5 may employ latching on-off valve units with a configuration in which the valve opening state and the valve closing state are maintained even when not energized.

In this specification, terms indicating shapes, such as "circular cylindrical" and "circular columnar", are also used for members and portions of the members substantially having the shapes indicated by the terms. For example, "a circular cylindrical member" includes a circular cylindrical member and a substantially circular cylindrical member.

The embodiment of the present invention is described above. The present invention, however, is not limited to the embodiment. Embodiments obtained by a person skilled in the art appropriately adding, removing, or modifying components according to the embodiment described above, and an embodiment obtained by appropriately combining features of the embodiment are included in the scope of the present invention without departing from the spirit of the present invention.

### Reference Signs List

1 ... air conditioning device, 5 ... valve device, 7 ... bolt, 10 ... valve module, 20 ... receiver drier, 30 ... compressor, 40 ... indoor condenser, 50 ... indoor evaporator, 60 ... outdoor heat exchanger, 70 ... flow control valve, 100 ... valve body, 111 ... first indoor-side opening, 112 ... second indoor-side opening, 113 ... third indoor-side opening, 114 ... fourth indoor-side opening, 121 ... first outdoor-side opening, 122 ... second outdoor-side opening, 131 ... first intermediate opening, 132 ... second intermediate opening, 151 ... first refrigerant passage, 151a ... refrigerant passage, 151b ... refrigerant passage, 152 ... second refrigerant passage, 152a ... first passage part, 152b ... second passage part, 152c ... connecting point, 153 ... third refrigerant passage, 153a ... refrigerant passage, 154 ... fourth refrigerant passage, 154a ... refrigerant passage, 155 ... fifth refrigerant passage, 156 ... sixth refrigerant passage, 156a ... refrigerant passage, 157 ... seventh refrigerant passage, 161 ... first mounting hole, 162 ... second mounting hole, 163 ... third mounting hole, 164 ... fourth mounting hole, 171 ... first through hole, 172 ... second through hole, 191 ... groove, 192 ... heat exchange member, 210 ... receiver drier body, 220 ... lid member, 231 ... first connecting hole, 232 ... second connecting hole, 271 ... first screw hole, 272 ... second screw hole, 250 ... first joint member, 250a ... inner space, 251 ... first part, 252 ... second part, 260 ... second joint member, 261 ... first part, 262 ... second part, 263 ... third part, 263a ... peripheral wall portion, 263b ... upper wall portion, 300 ... first on-off valve unit, 311 ... first valve chamber, 312 ... first valve port, 313 ... first valve seat, 314 ... back-pressure chamber, 320 ... main valve member, 325 ... pilot passage, 326 ... pressure equalizing passage, 330 ... valve-member driving section, 331 ... holder, 332 ... case, 333 ... plunger, 333a ... spring housing hole, 333b ... bottom surface, 334 ... electromagnetic coil, 335 ... pilot valve member, 336 ... fixed core, 336a ... spring receiving member, 337 ... valve opening spring, 338 ... plunger spring, 400 ... second on-off valve unit, 411 ... second valve chamber, 412 ... second valve port, 413 ... second valve seat, 414 ... back-pressure chamber, 420 ... main valve member, 421 ... body portion, 422 ... first flange portion, 423 ... second flange portion, 425 ... pilot passage, 426 ... pressure equalizing passage, 430 ... valve-member driving section, 431 ... fixed core, 431a ... large-diameter cylindrical portion, 431b ... small-diameter cylindrical portion, 432 ... case, 433 ... plunger, 434 ... electromagnetic coil, 435 ... pilot valve member, 436 ... valve shaft, 437 ... valve opening spring, 438 ... plunger spring, 500 ... third on-off valve unit, 511 ... third valve chamber, 512 ... third valve port, 513 ... third valve seat, 520 ... main valve member, 525 ... pilot passage, 526 ... pressure equalizing passage, 530 ... valve-member driving section, 600 ... flow control valve unit, 611 ... fourth valve chamber, 612 ... fourth valve port, 613 ... fourth valve seat, 620 ... valve member, 621 ... stem, 622 ... valve portion, 623 ... spring receiving portion, 623a ... flange, 624 ... ball receiving portion, 630 ... valve-member driving section, 640 ... holder, 642 ... driving-shaft supporting member, 642c ... internal thread, 644 ... valve-member supporting member, 644a ... valve-member supporting hole, 646 ... valve opening spring, 650 ... can, 651 ... annular member, 660 ... rotor, 662 ... connecting member, 663 ... rotor shaft, 670 ... planetary gear mechanism, 671 ... fixed ring gear, 672 ... sun gear, 673 ... planetary gear, 674 ... carrier, 675 ... output gear, 676 ... output shaft, 676a ... slit, 682 ... driving shaft, 682a ... circular columnar portion, 682b ... flat plate portion, 682c ... external thread, 684 ... ball, 690 ... stator unit, 691 ... stator, 700 ... first check valve unit, 713 ... valve seat, 720 ... valve member, 721 ... valve portion, 730 ... coil spring, 740 ... holding member, 800 ... second check valve unit, 813 ... valve seat, 820 ... valve member, 821 ... valve portion, 830 ... coil spring, P1 to P7 ... pipe

## Claims

1. A valve device used in a refrigeration cycle device comprising:
a valve body including refrigerant passages; and
valve units mounted on or in the valve body,
wherein the refrigerant passages include a high-temperature refrigerant passage through which high-temperature refrigerant flows, a medium-temperature refrigerant passage through which medium-temperature refrigerant with a lower temperature than the high-temperature refrigerant flows, and a low-temperature refrigerant passage through which low-temperature refrigerant with a lower temperature than the medium-temperature refrigerant flows.

2. The valve device according to Claim 1, wherein an outlet of the low-temperature refrigerant passage is adjacent to an outlet of the medium-temperature refrigerant passage.

3. The valve device according to Claim 1 or Claim 2,
wherein an outlet of the low-temperature refrigerant passage is between an outlet of the medium-temperature refrigerant passage and an outlet of the high-temperature refrigerant passage.

4. The valve device according to any one of Claim 1 to Claim 3, wherein a minimum distance between the low-temperature refrigerant passage and the medium-temperature refrigerant passage is shorter than a minimum distance between the high-temperature refrigerant passage and the medium-temperature refrigerant passage.

5. The valve device according to any one of Claim 1 to Claim 4, wherein a heat exchange mechanism facilitating heat exchange between refrigerant flowing through the low-temperature refrigerant passage and the valve body is provided in the low-temperature refrigerant passage.

6. The valve device according to Claim 5, wherein the heat exchange mechanism includes grooves formed on an inner surface of the low-temperature refrigerant passage.

7. The valve device according to Claim 5,
wherein the heat exchange mechanism includes a heat exchange member having a cylindrical shape,
wherein an outer peripheral surface of the heat exchange member is in close contact with an inner surface of the low-temperature refrigerant passage, and refrigerant flows inside the heat exchange member, and
wherein the heat exchange member has a higher thermal conductivity than the valve body.

8. The valve device according to any one of Claim 1 to Claim 7,
wherein the refrigeration cycle device includes a compressor and an indoor condenser arranged downstream of the compressor,
wherein the high-temperature refrigerant passage is connected to an outlet of the indoor condenser, and
wherein the low-temperature refrigerant passage is connected to a suction port of the compressor.

9. The valve device according to Claim 8,
wherein the refrigeration cycle device or the valve device includes an expansion valve, and
wherein the medium-temperature refrigerant passage is connected to the expansion valve.

10. The valve device according to Claim 1,
wherein the valve body includes an outer surface having a first indoor-side opening, a second indoor-side opening, a third indoor-side opening, a fourth indoor-side opening, a first outdoor-side opening, a second outdoor-side opening, a first intermediate opening, and a second intermediate opening,
wherein the refrigerant passages include a first refrigerant passage connecting the first indoor-side opening and the second intermediate opening, a second refrigerant passage connecting the first indoor-side opening and the second outdoor-side opening, a third refrigerant passage connecting the first intermediate opening and the second refrigerant passage, a fourth refrigerant passage connecting the first outdoor-side opening and the second intermediate opening, a fifth refrigerant passage connecting the first intermediate opening and the second indoor-side opening, a sixth refrigerant passage connecting the first outdoor-side opening and the third indoor-side opening, and a seventh refrigerant passage connecting the fourth indoor-side opening and the third indoor-side opening,
wherein the second refrigerant passage includes a first passage part between the first indoor-side opening and a connecting point to which the third refrigerant passage is connected, and a second passage part between the second outdoor-side opening and the connecting point,
wherein the valve units include a first on-off valve unit configured to open and close the first refrigerant passage, a second on-off valve unit configured to open and close the first passage part of the second refrigerant passage, a third on-off valve unit configured to open and close the sixth refrigerant passage, a flow control valve unit configured to change, in a stepless manner, a passage area of the second passage part of the second refrigerant passage, a first check valve unit that allows refrigerant to flow in the third refrigerant passage from the first intermediate opening to the second refrigerant passage and restricts refrigerant from flowing in the third refrigerant passage from the second refrigerant passage to the first intermediate opening, and a second check valve unit that allows refrigerant to flow in the fourth refrigerant passage from the first outdoor-side opening to the second intermediate opening and restricts refrigerant from flowing in the fourth refrigerant passage from the second intermediate opening to the first outdoor-side opening,
wherein, in a heating operation mode, the first refrigerant passage serves as the high-temperature refrigerant passage, the third refrigerant passage serves as the medium-temperature refrigerant passage, and the sixth refrigerant passage serves as the low-temperature refrigerant passage,
wherein, in a cooling operation mode, the second refrigerant passage and the fourth refrigerant passage each serve as the high-temperature refrigerant passage, the fifth refrigerant passage serves as the medium-temperature refrigerant passage, and the seventh refrigerant passage serves as the low-temperature refrigerant passage,
wherein, in the heating operation mode, the first on-off valve unit opens the first refrigerant passage, the second on-off valve unit closes the first passage part, the flow control valve unit opens the second passage part and controls the passage area of the second passage part into a size capable of expanding refrigerant, and the third on-off valve unit opens the sixth refrigerant passage, and
wherein, in the cooling operation mode, the first on-off valve unit closes the first refrigerant passage, the second on-off valve unit opens the first passage part, the flow control valve unit opens the second passage part and controls the passage area of the second passage part into a size that inhibits expansion of refrigerant, and the third on-off valve unit closes the sixth refrigerant passage.

11. The valve device according to Claim 10, wherein the third indoor-side opening is adjacent to the second indoor-side opening.

12. The valve device according to Claim 10 or Claim 11, wherein the third indoor-side opening is between the second outdoor-side opening and the second indoor-side opening.

13. The valve device according to any one of Claim 10 to Claim 12,
wherein the refrigeration cycle device includes a compressor, an indoor condenser arranged downstream of the compressor, an outdoor heat exchanger, a flow control valve, and an indoor evaporator arranged downstream of the flow control valve,
wherein the valve device includes a receiver drier,
wherein the first indoor-side opening is connected to an outlet of the indoor condenser,
wherein the second indoor-side opening is connected to the flow control valve,
wherein the third indoor-side opening is connected to a suction port of the compressor,
wherein the fourth indoor-side opening is connected to an outlet of the indoor evaporator,
wherein the first outdoor-side opening is connected to an outlet of the outdoor heat exchanger,
wherein the second outdoor-side opening is connected to an inlet of the outdoor heat exchanger,
wherein the first intermediate opening is connected to an outlet of the receiver drier, and
wherein the second intermediate opening is connected to an inlet of the receiver drier.
